# EUROPÄISCHE PATENTSCHRIFT

(11) **EP 4 003 024 B1**
(45) Veröffentlichungstag und Bekanntmachung des Hinweises auf die Patenterteilung: **22.11.2023**
(21) Anmeldenummer: 18779551.3
(22) Anmeldetag: 21.09.2018
(51) Int. Cl.: A21C 3/02

(54) **VORRICHTUNG ZUM FORMEN EINES TEIGBANDES**
DEVICE FOR FORMING A DOUGH STRIP
DISPOSITIF PERMETTANT DE FAÇONNER UN RUBAN DE PÂTE

(30) Priorität: 22.09.2017 AT 508062017
(43) Veröffentlichungstag der Anmeldung: 01.06.2022
(73) Patentinhaber: König Maschinen Gesellschaft m.b.H., 8045 Graz (AT)
(72) Erfinder: Hierzenberger, Johannes, 8715 St. Margarethen bei Knittelfeld (AT); Stelzer, Hannes, 8502 Lannach (AT); Rauch, Eduard, 8231 St. Margarethan (AT)
(74) Vertreter: Wildhack & Jellinek Patentanwälte
(86) Internationale Anmeldenummer: PCT/AT2018/060222
(87) Internationale Veröffentlichungsnummer: WO 2019/056039

(56) Entgegenhaltungen:
- EP-A2- 1 046 339
- EP-A2- 2 111 757
- AT-B- 293 306
- AT-B- 395 364
- DE-A1-102014 201 243
- DE-C1- 4 342 519
- DE-C1- 19 507 362
- US-A- 5 180 593

## Beschreibung

Die Erfindung betrifft eine Vorrichtung zum Formen eines Teigbandes gemäß dem Oberbegriff des Patentanspruchs 1.

Aus dem Stand der Technik ist eine Vielzahl von Vorrichtungen zum Formen von Teigbändern bekannt, welche eine Teigcharge mittels Press-, Transport- oder Formwalzen zu einem Teigband formen. Derartige Systeme mit sogenannten Walzenstühlen sind weit verbreitet und werden meistens für die Herstellung von Feingebäck bzw. sehr festen Teigen eingesetzt. Um eine Vielzahl von möglichen Teigen bearbeiten zu können, werden bisher im Stand der Technik spezialisierte, auf die Teige abgestimmte Teigbandformer verwendet, womit für jede Teigart unterschiedliche Vorrichtungen vorrätig sein müssen und dies zu hohen Anschaffungskosten, Platzbedarf, einer erhöhten Wartung, Reinigung und Instandhaltung führt.

Aus der EP 2 111 757 A2 ist eine Vorrichtung zum Formen eines Teigbandes bekannt umfassend eine Teigzufuhreinrichtung mit der Teig in die Vorrichtung einbringbar ist, eine um ihre Achse drehbare Einzugswalze und eine um ihre Achse drehbare Formwalze und zumindest einen Antrieb mit dem die Einzugswalze und die Formwalze antreibbar sind. Die Achsen der Walzen sind parallel in einem Abstand zueinander angeordnet, wobei zwischen der Einzugswalze und der Formwalze eine Teigkammer ausgebildet ist. Die Vorrichtung weist zwei Abdeckschilde auf, die die Teigkammer an den Stirnseiten der Walzen begrenzen. Die Walzen sind fliegend gelagert, wobei die Lagerungen der Walzen auf einer Seite der Vorrichtung neben der Teigkammer angeordnet sind. Ferner ist zwischen dem Antrieb und den Walzen eine Aufsteckachse angeordnet, die in einem Lagergehäuse gelagert ist, wobei die Walzen auf der Aufsteckachse lösbar befestigt und über die Aufsteckachse durch den Antrieb verdrehbar sind, wobei die Lagerung der Walzen durch die Lagerung der Aufsteckachse ausgebildet ist.

Teige für Feingebäck benötigen beim Formen aus der Teigcharge zu einem Teigband sehr hohen Druck, dürfen keine Gärblasen aufweisen und werden im Formprozess laufend vermischt. Dies wird beispielsweise durch profilierte Walzen und unterschiedliche Umfangsgeschwindigkeiten zwischen Press- und den Auslaufwalzen bewirkt.

Hefeteige, z.B. für Gebäck wie Brötchen, Brote oder ähnliches, sollten eine bestimmte Anzahl an Gärblasen aufweisen und werden bei hohen Qualitätsanforderungen nur gering bzw. wenig belastet. Die Struktur der Teige sollte daher nach dem Knetprozess nur gering bis gar nicht verändert werden und ein Mischen im Bandformprozess ist zu verhindern. Teige, speziell sehr weiche Teige, mit hoher Kesselgare- Fermentation und gewünscht sehr hohen Anteil an Gärblassen wie z.B. Baguettte, Ciabatta, Foccacia oder andere Teige sollen in ihrer Struktur unverändert und unvermischt zu einem Teigband geformt werden.

Ziel der Erfindung ist es, die Anforderungen der unterschiedlichen Teige an die unterschiedliche Ausformung von Teigbändern mit nur einer Maschineneinheit gewährleisten zu können und den im Stand der Technik hohen Bedarf an unterschiedlichen Maschinen zu reduzieren.

Diese Aufgabe wird durch eine Vorrichtung nach Anspruch 1 gelöst.

Durch die Anordnung der Aufsteckachse zwischen der Einzugswalze, der Formwalze, der Austragswalze und dem Antrieb ist es möglich einen einfachen Wechsel der unterschiedlichen Walzenformen für unterschiedliche Teige zu ermöglichen. So können beispielsweise unterschiedliche Walzensätze für einzelne Teige spezialisiert bereitgestellt und platzsparend gelagert werden und der Austausch von einzelnen Walzen oder des gesamten Walzensatzes ermöglicht werden und derart eine große Bandbreite von Teigen mit nur geringem Umrüstaufwand auf ein und derselben Maschine bearbeitet werden. Durch die einseitige Lagerung der Walzen und der Anordnung der Walzen auf den Aufsteckachsen ist es möglich, die Walzen einfach zu reinigen und den Austausch der Walzen bzw. Walzensätze von der frei zugänglichen Seite der Vorrichtung bequem, einfach und ohne großen Manneinsatz durchzuführen. So ist es beispielsweise möglich im Gegenteil zum Stand der Technik einen Austausch der Walzen mit nur einer Person durchzuführen, wodurch ein enormer Umrüstaufwand und damit verbunden hohe Kosten vermieden werden.

Besonders vorteilhafte Ausführungsformen der Vorrichtung werden durch die Merkmale der abhängigen Ansprüche näher definiert:
Eine vorteilhafte Ausführungsform der Erfindung wird bereitgestellt, indem die Vorrichtung drei Aufsteckachsen aufweist, wobei jeweils die Einzugswalze und/oder die Formwalze und/oder die Austragswalze auf den jeweiligen Aufsteckachsen wechselbar, aufsteckbar und/oder lösbar befestigt sind.

Um die Breite des zu produzierenden Teigbandes an die Anforderungen des Teiges und die Menge des verfügbaren Teiges besser einstellen zu können, kann vorgesehen sein, dass die Einzugswalze und/oder die Formwalze und/oder die Austragswalze aus einer Anzahl von Teilrollen mit definierter Breite bestehen, wobei die Teilrollen der Einzugswalze und/oder der Formwalze und/oder der Austragswalze jeweils den gleichen Durchmesser aufweisen und, insbesondere stirnseitig, aneinander befestigbar sind und dass die Summe der Breite der Teilrollen, die Breite der Einzugswalze und/oder der Formwalze und/oder der Austragswalze vorgeben. Durch den Aufbau der Walzen aus einer Anzahl von Teilrollen ist es möglich, eine flexible Breite des zu erzeugenden Teigbandes zu bewirken, wobei je nach benötigter Breite eine größere oder geringere Anzahl von Teilrollen aneinander gefügt werden und dadurch, ähnlich einem Baukasten, die erforderliche Breite der einzelnen Walzen bewirken.

Um eine Vielzahl unterschiedlicher Teige und Teigarten verarbeiten zu können, kann vorgesehen sein, dass die Einzugswalze und/oder die Formwalze und/oder die Austragswalze als Profilwalzen ausgebildet sind, wobei die Profile karo-, loch-, zick-zack-, pfeil-, bogen- oder wellenförmig als Vertiefungen oder als Erhöhungen entlang des Umfangs der Einzugswalze und/oder der Formwalze und/oder der Austragswalze ausgebildet sind.

Die Dicke des Teigbandes und der Druck innerhalb der Teigkammer bzw. der Druck auf den Teig kann vorteilhaft eingestellt werden, indem die Vorrichtung eine Schwenkvorrichtung umfasst, wobei die Einzugswalze und/oder die Formwalze und/oder die Austragswalze mittels der Schwenkvorrichtung verschwenkbar sind, wobei der Abstand der Achse der Einzugswalze und/oder der Formwalze und/oder der Austragswalze zu den Achsen zumindest einer der jeweils anderen Walzen verstellbar ist. Mittels der Schwenkvorrichtung ist es einfach möglich den Druck zwischen den Walzen bzw. auch den Spalt zwischen den Walzen einzustellen und derart die Druckvoraussetzungen auf den Teig und die Dicke der Teigbänder vorteilhaft einzustellen. Weiters wird durch die Schwenkvorrichtung ermöglicht, dass die Walzen einzeln im Abstand zueinander angeordnet werden können, sodass eine vereinfachte Reinigung der Walzen, beispielsweise beim Wechsel von Teigen oder beim Ausbau der einzelnen Walzensätze, erreicht wird.

Eine vorteilhafte Ausführungsform wird bereitgestellt, indem die Schwenkvorrichtung einen Schwenkhebel umfasst, wobei der Schwenkhebel um eine Schwenkachse, insbesondere mittels eines Hydraulik- oder Pneumatikzylinders oder elektromechanisch, verschwenkbar ist, und wobei die Lagerung der Einzugswalze und/oder der Formwalze und/oder der Austragswalze in dem Schwenkhebel angeordnet ist, wobei bei Verschwenken des Schwenkhebels der Abstand der Achse der Einzugswalze und/oder der Formwalze und/oder der Austragswalze zu den jeweils anderen Walzen verstellbar und einstellbar ist.

Dadurch, dass die Abdeckschilde lösbar an der Vorrichtung befestigt sind, die Vorrichtung zumindest eine Spannvorrichtung, insbesondere einen Spannzylinder, umfasst, wobei mit der Spannvorrichtung, insbesondere dem Spannzylinder, zumindest eines der Abdeckschilde in Richtung der Achse der Einzugswalze und/oder der Formwalze und/oder der Austragswalze an die Einzugswalze, die Formwalze und die Austragswalze andrückbar ist, wobei die Spannvorrichtung, insbesondere der Spannzylinder, neben der Teigkammer, vorzugsweise in dem Lagergehäuse, auf der Seite Vorrichtung angeordnet ist, auf der die Lagerungen der Einzugswalze, der Formwalze und der Austragswalze angeordnet sind, wird eine besonders einfache Montage und ein einfacher Wechsel der einzelnen Walzensätze ermöglicht. Durch die Spannvorrichtung bzw den Spannzylinder ist es einfach möglich, Druck auf die Abdeckschilde auszuüben und so die Abdeckschilde in Richtung der Walzen stirnseitig anzudrücken, wodurch eine dichte Teigkammer bereitgestellt wird. Nach Beendigung des Formprozesses des Teigbandes kann die Spannvorrichtung oder der Spannzylinder gelockert werden und die Abdeckschilde beispielsweise aus der Vorrichtung ausgehoben und so die Teigkammer freigelegt werden. Durch die freigelegte Teigkammer bzw. die Entfernung der Abdeckschilde ist es einfach möglich, die Vorrichtung gut mit viel Platz für das Bedienpersonal zu reinigen und auch den Wechsel der einzelnen Walzen bzw. Walzensätze einfacher durchzuführen.

Erfindungsgemäß sind die Einzugswalze und/oder die Formwalze und/oder die Austragswalze und/oder die jeweilige Aufsteckachse hohlzylindrisch ausgebildet, wobei die Vorrichtung zumindest eine, insbesondere drei, längliche Spannachse aufweist, - wobei die Spannachse, insbesondere jeweils eine der drei Spannachsen, durch die Einzugswalze oder die Formwalze oder die Austragswalze und jeweils die jeweilige Aufsteckachse durchgeführt ist und die jeweilige Walze auf der Spannachse, insbesondere der jeweiligen Spannachse, drehbar gelagert ist,
- wobei die Spannachse mit der Spannvorrichtung, insbesondere dem Spannzylinder, insbesondere alle Spannachsen über einen Spannflansch mit dem Spannzylinder, verbunden ist und zumindest eines der Abdeckschilde, insbesondere der dem Lagergehäuse bezüglich der Walzen gegenüberliegende Abdeckschild, mit der Spannachse derart, insbesondere lösbar, verbunden ist, dass bei Betätigung der Spannvorrichtung, insbesondere des Spannzylinders, zumindest einer der Abdeckschilde, insbesondere der dem Lagergehäuse gegenüberliegende Abdeckschild, in Richtung der Achse der Einzugswalze, der Formwalze und der Austragswalze an die Einzugswalze, die Formwalze und die Austragswalze andrückbar ist. Dadurch, dass die Spannachsen durch die Achsen der einzelnen Rollen und der Aufsteckachsen durchgeführt wird, wird eine einfache Spannvorrichtung für die Abdeckschilde bereitgestellt. Weiters wird im Betrieb sicher gestellt, dass bei Betätigung der Spannvorrichtung, insbesondere des Spannzylinders, die Teigkammer abgedichtet ist und die Formwalzen stirnseitig durch die Abdeckschilde abgedeckt sind. Durch die Spannvorrichtung bzw. den Spannzylinder bzw. die Spannachsen wird weiters auch verhindert, dass die einzelnen Walzen entlang ihrer Achsen wandern bzw. verrutschen können und die Montage der einzelnen Walzensätze weiter vereinfacht. So muss die Befestigung der einzelnen Walzen nicht aufwendig überprüft werden, sondern kann einfach an den Aufsteckachsen einzeln angebracht werden, die Abdeckschilde montiert werden und dann mittels der Spannvorrichtung, insbesondere bzw. des Spannzylinders die nötige Befestigung und Verspannung der Walzen und Abdeckschilde erreicht werden.

Um die Spannachsen an die unterschiedliche Breite der Walzen bzw. Walzensätze anpassen zu können, kann vorgesehen sein, dass die Spannachse, insbesondere die drei Spannachsen, längenverstellbar ausgebildet ist, wobei die Spannachse eine Spannstange und eine zumindest teilweise hohl ausgebildete Spannhülse umfasst, wobei die Spannstange in der Spannhülse definiert versenkbar ist und derart die Länge der Spannachse veränderbar ist. Durch die teleskopartige Verstellung der Spannachsen wird die Breite der Spannvorrichtung einfach eingestellt und die Einsetzbarkeit einer breiteren Anzahl von Walzensätzen mit unterschiedlicher Breite weiter erhöht.

Vorteilhaft kann vorgesehen sein, dass die Spannstange und die Spannhülse ein jeweils gegengleich ausgebildetes Gewinde oder Rastelement umfassen, wobei die Spannstange in der Spannhülse zur Längenverstellung der Spannachse, insbesondere durch Verdrehung der Spannhülse relativ zur Spannstange, teleskopartig schrittweise versenkbar ist.

Eine bevorzugte Möglichkeit der Einstellung der Spannachsen wird bereitgestellt, indem die Spannstange eine Anzahl entlang der Achse hintereinanderliegender, im Querschnitt vieleckig, insbesondere viereckig, ausgebildeter Abschnitte aufweist, wobei die Spannhülse zumindest eine Einfuhröffnung aufweist, die gegengleich den vieleckig ausgebildeten Abschnitten der Spannhülse ausgebildet ist, wobei bei Verdrehung der Spannachse in ihrer Achse relativ zur Spannhülse, insbesondere um 90°, die Spannachse von einer Verstellposition in eine Verriegelungsposition verstellbar ist, wobei in der Verstellposition einer der im Querschnitt vieleckig ausgebildeten Abschnitte der Spannstange mit der Einfuhröffnung deckungsgleich angeordnet ist und die Spannachse um die Breite des vieleckig ausgebildeten Abschnittes der Spannstange in der Spannhülse versenkbar ist und wobei in der Verriegelungsposition einer der vieleckig ausgebildeten Abschnitte der Spannstange nicht deckungsgleich mit der Einfuhröffnung angeordnet ist, sodass die Stirnseite des vieleckig ausgebildeten Abschnittes an der Stirnseite der Einfuhröffnung ansteht und die Spannstange nicht in die Spannhülse versenkbar ist.

Der Druck in der Teigkammer und damit der Druck bzw. Zug auf das geformte bzw. zu formende Teigband kann einfach eingestellt werden, indem die Vorrichtung drei Antriebe umfasst, wobei die Einzugswalze und die Formwalze und die Austragswalze jeweils separat, vorzugsweise mit unterschiedlichen Drehzahlen, antreibbar sind. So ist es beispielsweise möglich, je nach Anforderungen der Teige die Drehzahlen zwischen der Austragswalze, der Formwalze und der Einzugswalze zu verändern, sodass innerhalb der Teigkammer ein erhöhter Druck, ein geringer oder gar kein Druck auf den Teig ausgeübt wird und so die Qualität des Teiges verbessert oder beibehalten bleibt.

Um die Teigzufuhrvorrichtung einfach an die Breite der Walzen einstellen zu können, kann vorgesehen sein, dass die Teigzufuhreinrichtung trichterförmig ausgebildet ist, wobei die Teigzufuhreinrichtung auf die Vorrichtung aufsteckbar ist, wobei die Teigzufuhreinrichtung vorzugsweise zwei Führungen aufweist die in zwei deckungsgleich entlang der Breite der Teigkammer in den Abdeckschilden angeordnete und ausgebildete Ausnehmungen einführbar sind.

Vorteilhaft ist vorgesehen, dass die Teigzufuhreinrichtung eine verstellbare Breite aufweist, wobei die Teigzufuhreinrichtung vorzugsweise zwei zueinander in der Breite der Teigzufuhreinrichtung entlang der Breite der Einzugswalze und/oder der Formwalze und/oder der Austragswalze verstellbare Seitenteile aufweist.

Um die Spannung bzw. den Druck auf den Teig oder das Teigband vorteilhaft erfassen zu können, kann vorgesehen sein, dass die Vorrichtung zumindest einen Sensor aufweist, wobei der Sensor derart zwischen der Einzugswalze und/oder der Formwalze und/oder der Austragswalze angeordnet ist, dass die Dicke des produzierten Teigbandes in der Teigkammer und/oder am Ausgang der Teigkammer zwischen der Formwalze und der Austragswalze messbar ist und wobei insbesondere eine Regelvorrichtung vorgesehen ist, der die Messwerte des Sensors zugeführt werden und mit der die Drehzahl der Einzugswalze und/oder der Formwalze und/oder der Austragswalze regelbar ist. So kann mittels des Sensors erfasst werden, ob der Druck auf das Teigband bzw. die Dicke des Teigbandes zufriedenstellend ist und während dem Fertigungsprozess die Drehzahlen der einzelnen Walzen verändert werden, sodass Abweichungen innerhalb der Dicke der Teigbänder verhindert werden können.

Um ein nachteiliges Ablösen einzelner geformter Teigbänder von der Austragswalze vorteilhaft verhindern zu können, kann vorgesehen sein, dass zur Verbesserung der Porenverteilung in Transportrichtung des geformten Teigbandes nach der Teigkammer zumindest eine, insbesondere mehrere, Formrolle in einem Abstand, insbesondere einem Abstand entsprechend der Dicke des geformten Teigbandes, zur Austragswalze angeordnet ist.

Um eine gleichmäßige Verteilung der Gärblasen innerhalb des Teiges bzw. Teigbandes erhalten zu können bzw. auch hervorrufen zu können, kann vorgesehen sein, dass die Einzugswalze und/oder die Formwalze und/oder die Austragswalze und/oder die Formrolle über den Umfang radial verlaufende entlang der Breit gleichmäßig verteilte Formrillen aufweisen, wobei die Formrillen annähernd sinusförmig ausgebildet sind, wobei die Formrillen der Einzugswalze und/oder der Formwalze und/oder der Austragswalze und/oder der Formrolle jeweils gleich zueinander angeordnet sind, sodass jeweils die Wellentäler der Einzugswalze und/oder der Formwalze und/oder der Austragswalze und/oder der Formrolle mit den Wellentälern einer oder aller anderen Walzen deckungsgleich angeordnet sind, und/oder dass die Einzugswalze und/oder die Formwalze und/oder die Austragswalze und/oder die Formrolle über den Umfang radial verlaufende, entlang der Breit gleichmäßig verteilte Formrillen aufweisen, wobei die Formrillen annähernd sinusförmig ausgebildet sind, wobei die Formrillen der Einzugswalze und/oder der Formwalze und/oder der Austragswalze und/oder der Formrolle jeweils gegengleich zueinander angeordnet sind, sodass jeweils die Wellentäler der Einzugswalze und/oder der Formwalze und/oder der Austragswalze und/oder der Formrolle mit den Wellenbergen einer oder aller anderen Walzen deckungsgleich angeordnet sind.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

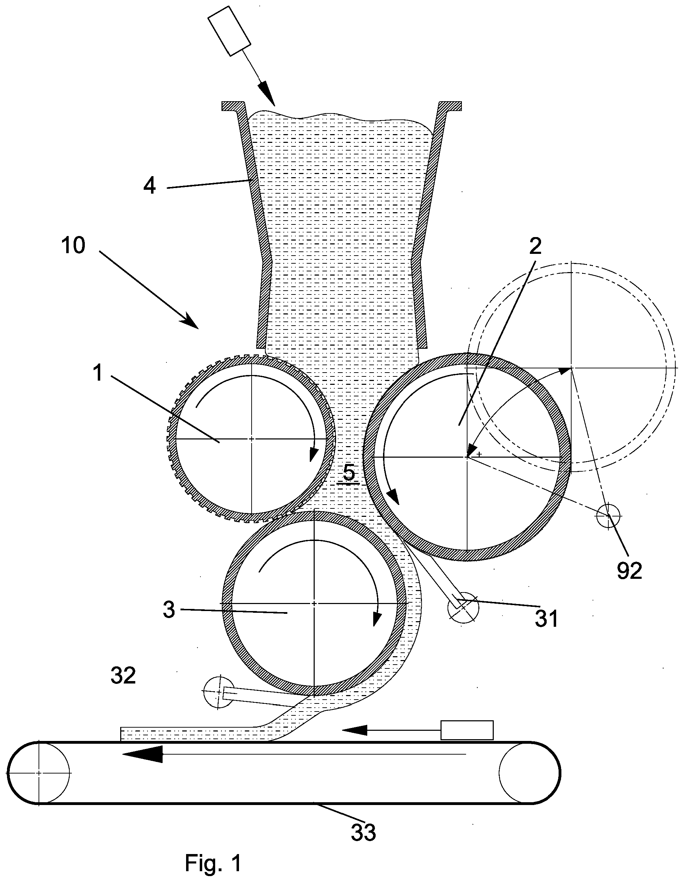

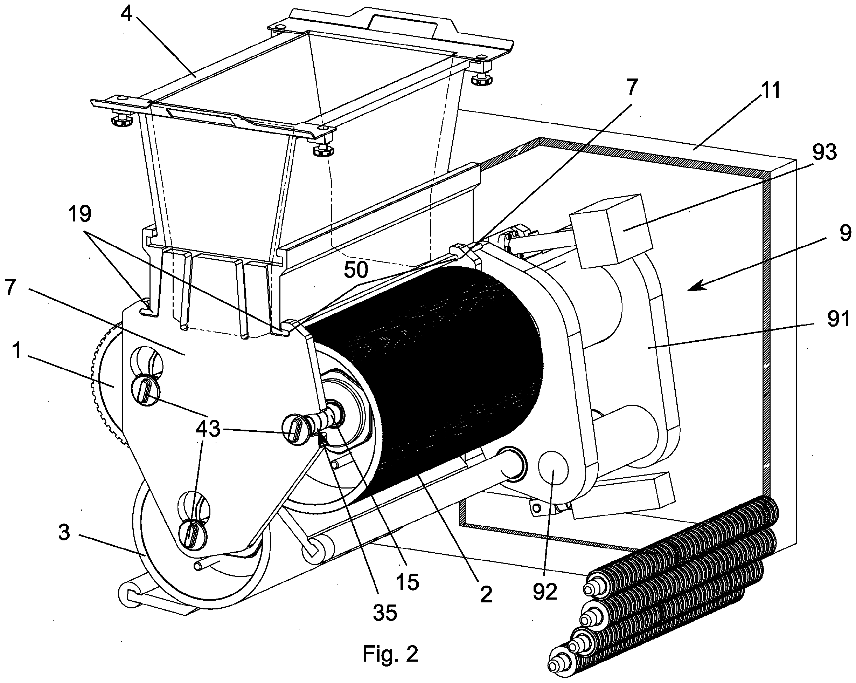

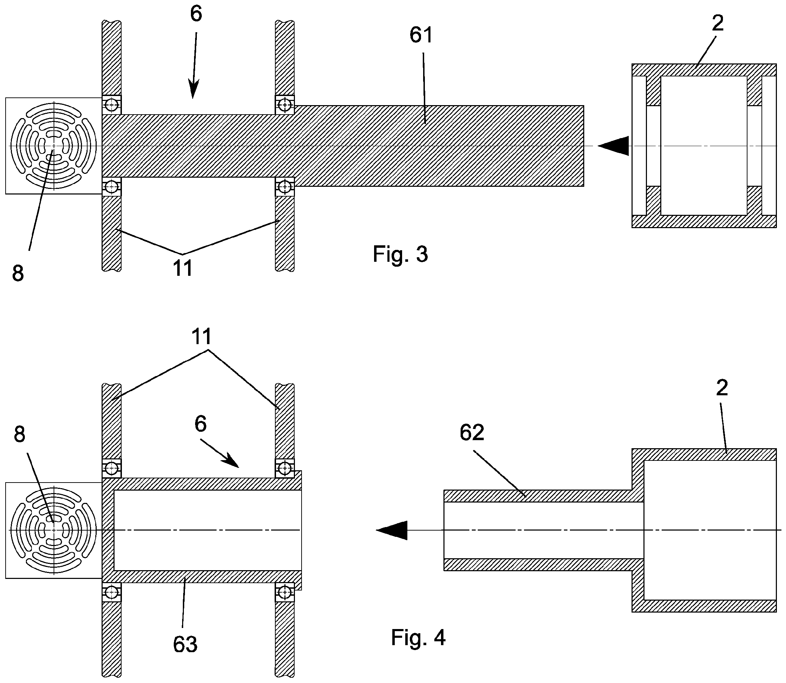

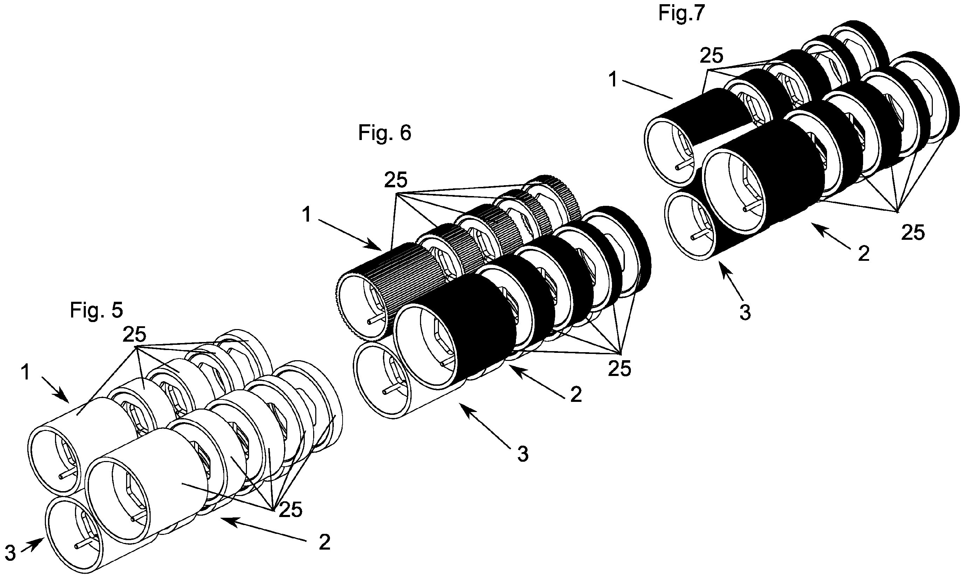

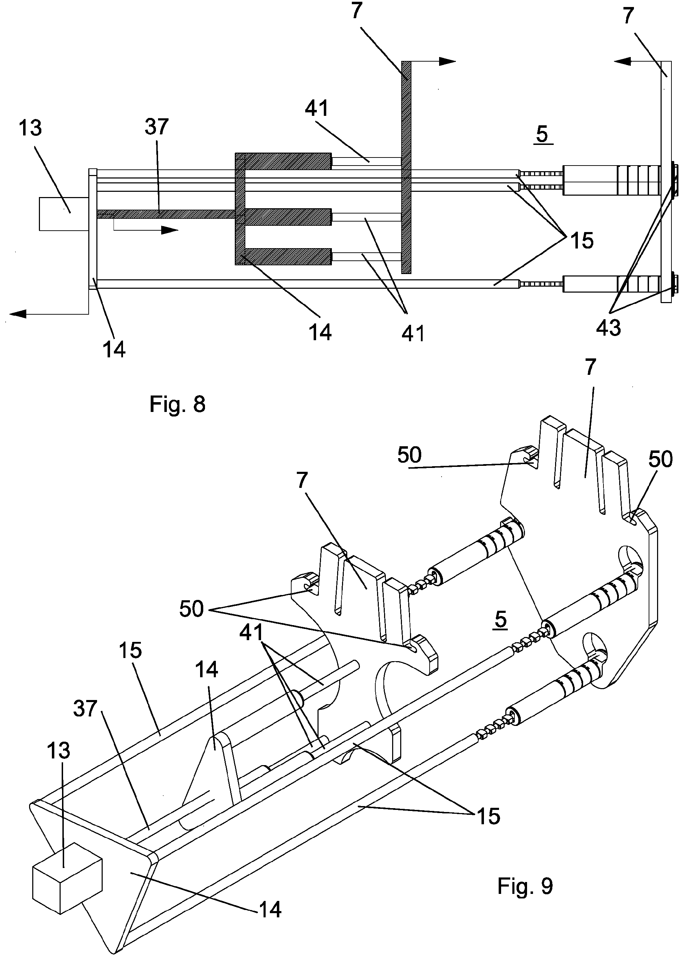

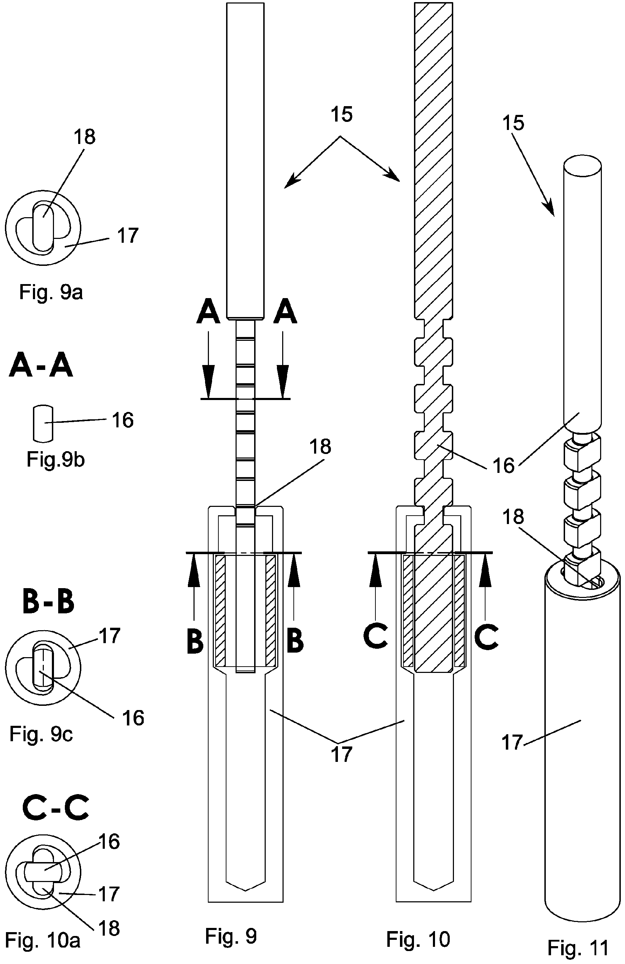

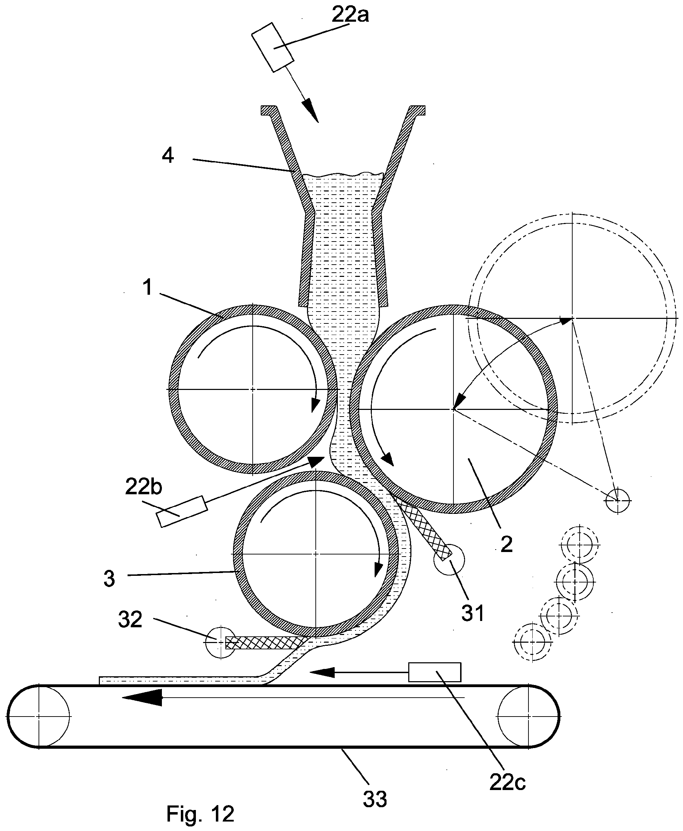

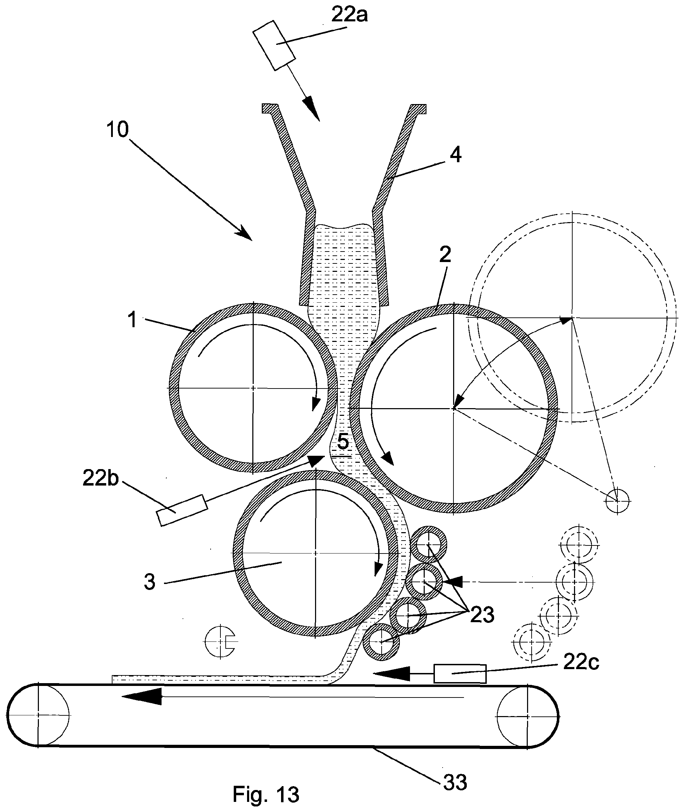

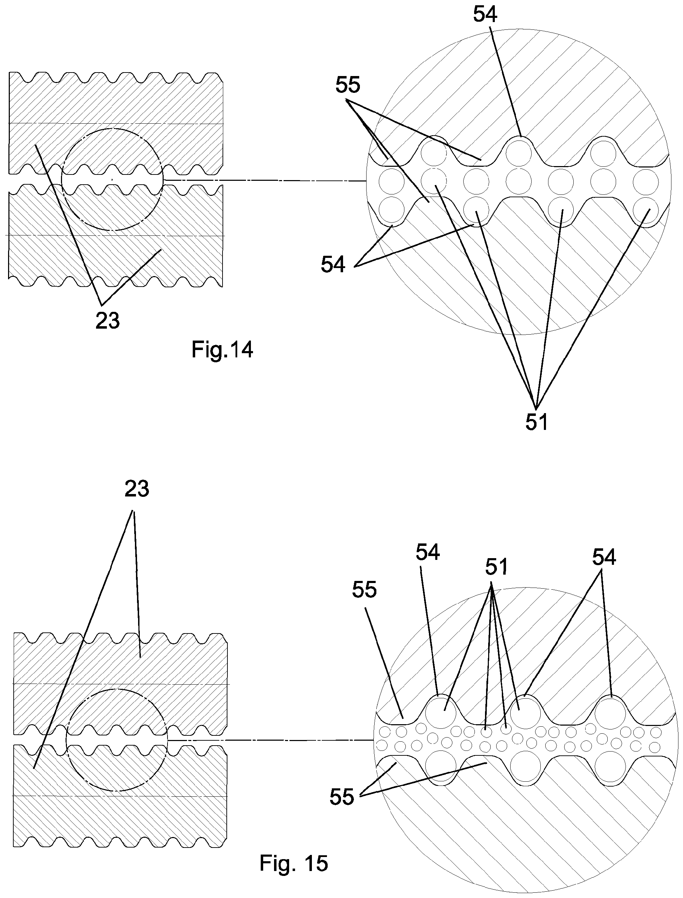

Fig. 1 zeigt eine Schnittansicht einer erfindungsgemäßen Vorrichtung, Fig. 2 zeigt eine isometrische Ansicht einer erfindungsgemäßen Ausführungsform, Fig. 3 zeigt eine Ausführungsform einer Aufsteckachse, Fig. 4 zeigt eine weitere Ausführungsform einer Aufsteckachse, Fig. 5 bis 7 zeigen unterschiedliche Ausführungsformen von Walzensätzen, Fig. 8 zeigt eine Schnittansicht einer Ausführungsform der Spannvorrichtung, Fig. 9 zeigt eine isometrische Ansicht der Spannvorrichtung gemäß Fig. 8, Fig. 9 bis 11 zeigen eine Ausführungsform einer längenverstellbaren Spannachse, Fig. 12 zeigt eine Ausführungsform der erfindungsgemäßen Vorrichtung in Schnittansicht, Fig. 13 zeigt eine weitere Ausführungsform der erfindungsgemäßen Vorrichtung in Schnittansicht, Fig. 14 zeigt eine Detailansicht der Walzen gemäß Fig. 13, und Fig. 15 zeigt eine Detailansicht der einer alternativen Ausführungsform der Walzen.

In Fig. 1 ist eine erfindungsgemäße Vorrichtung 10 in einer Schnittansicht dargestellt. Die Vorrichtung 10 umfasst eine Einzugswalze 1, eine Formwalze 2 und eine Austragswalze 3. Die Einzugswalze 1, die Formwalze 2 und die Austragswalze 3 sind jeweils um ihre Achse drehbar gelagert. Die Vorrichtung 10 umfasst weiters einen Antrieb 8, mit dem die Einzugswalze 1, die Formwalze 2 und die Austragswalze 3 angetrieben werden. Die Vorrichtung 10 weist zwei Abdeckschilde 7 (Fig. 2) auf, die jeweils seitlich an den Stirnseiten der Walzen angeordnet sind und an diesen anliegen. Die Vorrichtung 10 umfasst weiters einen ersten Abstreifer 31, der an der Formwalze 2 an deren Umfang anliegt, und einen zweiten Abstreifer 32, der am Umfang der Austragswalze 3 anliegt. Der erste Abstreifer 31 und der zweite Abstreifer 32 weisen die gleiche Breite wie die Walzen, also die Einzugswalze 1, die Formwalze 2 und die Austragswalze 3, auf. Die Einzugswalze 1, die Formwalze 2 und die Austragswalze 3 sind jeweils in einem Lagergehäuse 11 fliegend gelagert. Die Lagerungen bzw. Lagerstellen der einzelnen Walzen, also die Lagerstellen einer schwimmenden Lagerung oder die Fest- bzw. Loslager der Lagerungen der Walzen sind auf einer Seite der Vorrichtung 10 innerhalb des Lagergehäuses 11 (Fig. 2) angeordnet. Die Vorrichtung 10 weist eine Teigzufuhreinrichtung 4, die als Teigtrichter ausgebildet ist, auf, mit der Teig in die Vorrichtung 10 eingebracht wird. Die Achse der Einzugswalze 1 ist zur Achse der Formwalze 2 in einem Abstand im Bereich der Teigzufuhreinrichtung 4 angeordnet. Durch den Abstand der Achsen der Einzugswalze 1 und der Formwalze 2 zueinander ist zwischen den Walzen ein Spalt über den Teig von der Teigzufuhreinrichtung 4 auf den Umfang der Einzugswalze 1 und der Formwalze 2 aufgebracht. Die Achsen der Einzugswalze 1, der Formwalze 2 und der Austragswalze 3 sind jeweils zueinander in einem Abstand parallel angeordnet, sodass zwischen der Einzugswalze 1, der Formwalze 2 und der Austragswalze 3 eine Teigkammer 5 ausgebildet ist. Wie in Fig. 1 durch die Pfeile dargestellt, wird durch Drehung der Einzugswalze 1, beispielsweise im Uhrzeigersinn, Umdrehung der Formwalze 2 entgegen der Drehrichtung der Einzugswalze 1, also entgegen dem Uhrzeigersinn, Teig aus der Teigzufuhreinrichtung 4 in die Kammer 5 eingebracht. Die Achsen der Formwalze 2 und der Austragswalze 3 sind in einem Abstand zueinander angeordnet, sodass zwischen der Formwalze 2 und der Austragswalze 3 ein Spalt bzw. an deren Umfang ein Abstand zwischen den beiden Walzen ausgebildet ist. Zwischen dem Umfang der Einzugswalze 1 und der Austragswalze 3 ist kein Abstand bzw. nur ein geringer Abstand ausgebildet, sodass Teig aus der Teigkammer 5 nicht zwischen der Einzugswalze 1 und der Austragswalze 3 aus der Kammer 5 austreten kann. Durch Drehung der Austragswalze 3 in derselben Drehrichtung wie die Einzugswalze 1 wird nun der Teig aus der Teigkammer 5 zwischen der Formwalze 2 und der Austragswalze 3 aus der Vorrichtung 10 ausgebracht. Beim Ausbringen des Teiges aus der Teigkammer 5 wird ein Teigband mit einer vorgegebenen Dicke produziert. Die Dicke des Teigbandes 2 kann durch Verstellung des Abstandes zwischen der Formwalze 2 und der Austragswalze 3 vorgegeben bzw. eingestellt werden. Der erste Abstreifer 31, der im Umfang der Formwalze 2 im Bereich des Ausganges 3 der Teigkammer 5 anliegt, ermöglicht dabei die vollkommene Ablösung des geformten Teigbandes von der Formwalze 2 und glättet gleichzeitig die Oberfläche des zwischen der Formwalze 2 und der Austragswalze 3 gebildeten Teigbandes. Der zweite Abstreifer 32, der im Umfang der Austragswalze 3 anliegt, schält das geformte Teigband von der Austragswalze 3 ab bzw. verhindert, dass Teigreste des geformten Teigbandes an der Austragswalze 3 anhaften. Der Austragswalze 3 ist bei dieser Ausführungsform eine Fördereinrichtung 33, in diesem Fall ein Förderband, nachgestellt, auf das das geformte Teigband aufgelegt wird und aus der Vorrichtung 10 entlang der in der Fig. 1 durch den Pfeil dargestellten Transportrichtung ausgebracht wird. Zur einfachen Reinigung der Vorrichtung 10 bzw. zur Einstellung der Dicke des Teigbandes bzw. des Spaltes zwischen der Formwalze 2 und der Austragswalze 3 kann die Formwalze 2 durch eine Schwenkvorrichtung (Fig. 2) um eine Schwenkachse 92 verschwenkt werden.

In Fig. 2 ist eine Vorrichtung 10 in isometrischer Ansicht dargestellt. Die Lagerungen der Einzugswalze 1, der Formwalze 2 und der Austragswalze 3 sind in einem Lagergehäuse 11 angeordnet. Das Lagergehäuse 11 ist hermetisch abgedichtet, wodurch verhindert wird, dass Teig oder Reinigungsmittel in das Lagergehäuse 11 eindringen und die Lagerungen der Einzugswalze 1, der Formwalze 2 und der Austragswalze 3 beschädigen. Die Vorrichtung 10 umfasst eine Schwenkvorrichtung 9, auf der die Formwalze 2 verschenkbar gelagert ist. Die Schwenkvorrichtung 9 umfasst einen Schwenkhebel 91, der zwei zueinander im Abstand angeordnete Flansche aufweist, die gemeinsam um eine Schwenkachse 92 verschwenkbar sind. Die Schwenkvorrichtung 9 umfasst weiters einen Pneumatikzylinder 93, der an dem der Schwenkachse 92 gegenüberliegenden Ende des Schwenkhebels 91 angeordnet ist. Durch Veränderung des Hubes des Kolbens des Pneumatikzylinders 93 wird der Schwenkhebel 91 um die Schwenkachse 92 verschwenkt. Die Formwalze 2 ist auf dem Schwenkhebel 91 angeordnet, wobei die Lagerung der Formwalze 2 in dem Schwenkhebel 91 integriert ist. Durch Verschwenkung des Schwenkhebels 91 um die Schwenkachse 92 wird die Formwalze 2 mit diesem mitverschwenkt und der Abstand der Achse der Formwalze 2 zur Achse der Einzugswalze 1 bzw. zur Achse der Austragswalze 3 verändert. Auf dem Schwenkhebel 91 ist ebenfalls der erste Abstreifer 31 angeordnet, wodurch bei Verschwenken des Schwenkhebels 91 um die Schwenkachse 92 der Abstreifer 31 mit der Formwalze 2 mitverschwenkt wird. Durch Veränderung des Abstandes der Formwalze 2 zu den jeweils anderen Walzen bzw. zur Austragswalze 3 wird der Abstand zwischen dem Umfang der Austragswalze 3 und der Formwalze 2 verändert und somit die Dicke des Teigbandes, das aus der Teigkammer 5 ausgebracht wird, eingestellt.

Wie in Fig. 2 dargestellt, können die Abdeckschilde 7 an den Wellen bzw. Achsen der Walzen eingehängt werden, wodurch nach Verschwenken des Schwenkhebels 91 und damit der Verschwenkung der Formwalze 2 und dem Ausgleiten der Achse bzw. Welle der Formwalze 2 aus einer in den Abdeckschilden 7 ausgebildeten Führung 35 dann von den Achsen bzw. Wellen der Austragswalze 3 und der Einzugswalze 1 abgehoben werden. Durch die Abnahme der Abdeckschilde 7 wird der Zugang zur Teigkammer 5 weiters vereinfacht bzw. verbessert und so die Reinigung, Wartung und der Austausch einzelner Walzen bzw. Walzensätzen vereinfacht.

In Fig. 3 ist eine Detailansicht einer bevorzugten Ausführungsform der Vorrichtung 10 in einer Schnittansicht dargestellt. Die Vorrichtung 10 weist eine Aufsteckachse 6 auf, die zwischen der im Antrieb 8 und den einzelnen Walzen, also der Einzugswalze 1, der Formwalze 2 und/oder der Austragswalze 3, angeordnet ist. Die Aufsteckachse 6 ist in dem Lagergehäuse 11 gelagert und ragt aus diesem in Richtung der einzelnen Walzen, wie in Fig. 3 dargestellt die Formwalze 2, aus dem Lagergehäuse 11 mit einem Aufnahmeabschnitt 61 heraus. Die Formwalze 2 wird auf den Aufnahmeabschnitt 61 der Aufsteckachse 6 aufgesteckt und somit über die Aufsteckachse 6 mit dem Antrieb 8 verbunden. Die Lagerung der Formwalze 2 wird dann durch die Lagerung der Aufsteckachse 6 in dem Lagergehäuse 11 ausgebildet, wodurch die Formwalze 2 in dem Lagergehäuse 11 fliegend gelagert ist. Durch die Ausbildung der Aufsteckachse 6 ist es möglich, die einzelnen Walzen einfach und schnell an der Vorrichtung 10 zu befestigen und damit einen einfachen Umbau und Wechsel der einzelnen Walzen bzw. ganzer Walzensätze zu erreichen. Die einzelnen Walzen können dabei mit Sicherungsmitteln, beispielsweise Wellenmuttern oder anderen aus dem Stand der Technik bekannten Sicherungsmitteln, auf den Aufsteckachsen 6 befestigt und gegen Positionsänderungen gesichert werden. Optional kann vorgesehen sein, dass alle Walzen, also die Einzugswalze 1, die Formwalze 2 und die Austragswalze 3, jeweils auf separaten Aufsteckachsen 6 angeordnet sind und so alle Walzen einfach auf die Vorrichtung 10 bzw. die Aufsteckachsen 6 aufgesteckt werden können. Optional kann vorgesehen sein, dass jede Aufsteckachse 6 der einzelnen Walzen einen eigenen Antrieb 8 aufweist oder die Walzen gemeinsam über einen Antrieb und Getriebe angetrieben werden.

Fig. 4 zeigt eine weitere Ausführungsform der Aufsteckachse 6 in einer Schnittansicht. Die Aufsteckachse 6 ist wiederum in den Lagergehäuse 11 gelagert und zwischen dem Antrieb 8 und den Walzen, wie beispielhaft in Fig. 4 gezeigt der Formwalze 2, angeordnet. Die Aufsteckachse 6 ist hohlzylindrisch ausgebildet, wobei die Formwalze 2 einen Aufsteckdorn 62 aufweist, der in eine Einstecköffnung 63 der Aufsteckachse 6 eingesteckt werden kann. Der Aufsteckdorn 62 wird dabei in der Einstecköffnung 63 der Aufsteckachse 6 wechselbar bzw. lösbar befestigt, sodass ein einfacher Wechsel der einzelnen Walzen, wie bei dieser Ausführungsform dargestellt der Formwalze 2, ermöglicht wird.

In den Fig. 5 bis 7 sind unterschiedliche Ausführungsformen der drei Walzen, also der Einzugswalze 1, der Formwalze 2 und der Austragswalze 3 dargestellt. Die Einzugswalze 1, die Formwalze 2 und die Austragswalze 3 sind jeweils als Walzensätze ausgebildet, die jeweils auf eine Aufsteckachse 6 aufgesteckt werden können. Die Einzugswalze 1, die Formwalze 2 und die Austragswalze 3 bestehen bei den in den Figuren 5 bis 7 dargestellten Ausführungsformen aus einer Anzahl von Teilrollen 25, die eine definierte Breite aufweisen. Die Teilrollen 25 der einzelnen Walzen, also der Einzugswalze 1, der Formwalze 2 und der Austragswalze 3, weisen jeweils den gleichen Durchmesser auf, wobei die Teilrollen 25 der einzelnen Walzen unterschiedliche Durchmesser in bezug auf den Durchmesser der anderen Walzen aufweisen können. Die Teilrollen 25 sind stirnseitig aneinander befestigbar bzw. auf die Aufsteckachse 6 aufsteckbar und die Summe der Breite der Teilrollen 25 bilden die Breite der jeweiligen Walze, also der Einzugswalze 1, der Formwalze 2 und/oder der Austragswalze 3. Durch die Ausbildung der Walzen bzw. Walzensätze mit den Teilrollen 25 ist es möglich, die Breite der Walzen an die Anforderungen des zu produzierenden Teigbandes anzupassen und so die Breite des Teigbandes einzustellen. Optional kann vorgesehen sein, dass die Einzugswalze 1, die Formwalze 2 und die Austragswalze 3 als Profilwalzen ausgebildet sind, wobei die Profile der Walzen karo-, loch-, zickzack-, pfeil-, bogen- oder wellenförmig als Vertiefungen oder als Erhöhungen entlang des Umfangs der Einzugswalze, der Formwalze und/oder der Austragswalze ausgebildet sind.

In Fig. 8 und 9 ist eine Teilansicht der Vorrichtung 10 in einer Schnittansicht (Fig. 8) und einer isometrischen Ansicht (Fig. 9) dargestellt. Die Vorrichtung 10 weist eine Spannvorrichtung die als Spannzylinder 13 ausgebildet ist auf, der in dem Lagergehäuse 11 auf der Seite der Lagerungen der einzelnen Walzen angeordnet ist. Mit Hilfe des Spannzylinders 13 werden die Abdeckschilde 7 in Richtung der Achse der Einzugswalze 1, der Formwalze 2 und der Austragswalze 3 an die Einzugswalze 1, die Formwalze 2 und die Austragswalze 3 angedrückt und so die Teigkammer 5 seitlich, also an der Stirnseite der Walzen, abgedichtet. Der Spannzylinder 13 weist einen Spannflansch 14 auf, der an der Kolbenstange 37 des Spannzylinders 13 befestigt ist. An dem Spannflansch 14 sind drei Druckstangen 41 befestigt, die die Druckkraft des Zylinders auf das Abdeckschild 7, das auf der Lagerseite der Walzen neben der Teigkammer 5 angeordnet ist, aufbringen. Die Vorrichtung 10 weist weiters drei Spannachsen 15 auf, die über einen Spannflansch 14 mit dem Gehäuse des Spannzylinders 13 verbunden sind. Die Spannachsen 15 reichen von dem Lagergehäuse 11 bis durch den auf der dem Lagergehäuse 11 gegenüberliegenden Abdeckschild 7 hindurch und überragen bzw. durchsetzen die Teigkammer 5 vollständig. Die Spannachsen 15 weisen auf der dem Abdeckschild 7 nahen Ende eine pilzförmige Aufweitung 43 auf, die größer als die Ausnehmung des Abdeckschildes 7 ist, durch die die Spannachsen 15 hindurchragen. Durch die Anordnung der Spannflansche 14, der Druckstangen 41 und der Spannachsen 15 wird bei Betätigung des Spannzylinders 13 das dem Lagergehäuse 11 naheliegende Abdeckschild 7 in Richtung der Walzen gedrückt und das dem Lagergehäuse auf der gegenüberliegenden Seite der Teigkammer 5 gegenüberliegend angeordnete Abdeckschild 7 in Richtung der Stirnseite der Walzen, also der Einzugswalze 1, der Formwalze 2 und der Austragswalze 3, angedrückt bzw. hingezogen. Durch die Betätigung des Spannzylinders 13 wird somit die Abdichtung der Teigkammer 5 auf der Stirnseite der Walzen bewirkt. Die Kraftrichtung der einzelnen Komponenten des Spannzylinders 13 bzw. der Spannachsen 15 und der Spannflansche 14 ist in Fig. 8 durch Pfeile dargestellt. Optional kann, wie in Fig. 2 dargestellt, vorgesehen sein, dass die Einzugswalze 1, die Formwalze 2 und die Austragswalze 3 hohl ausgebildet sind und die Spannachsen 15 die Einzugswalze 1, die Formwalze 2 und die Austragswalze 3 vollständig durchsetzen, wobei die Walzen auf den Spannachsen 15 durch Gleit- oder Wälzlager gelagert werden. Die Spannachsen 15 können dabei auch die Aufsteckachsen 6 der einzelnen Walzen durchsetzen und somit durch Betätigung des Spannzylinders 13 eine Fixierung der Walzen bzw. der Teilrollen 25 der Walzen auf der Aufsteckachse 6 bzw. auf den Aufsteckachsen 6 bewirken.

Alternativ können anstelle des Spannzylinders 13 auch andere aus dem Stand der Technik bekannte Spannvorrichtungen, wie Pneumatik- oder Hydraulikzylinder oder mechanische Spannvorrichtungen oder elektromechanische Stellmotoren, Spindeltriebe oder anderes vorgesehen sein, die die Abdeckschilde 7 spannen.

Durch die bevorzugte Anordnung der Spannachsen 15 innerhalb der Walzen kann der Wechsel der einzelnen Walzen einfach vollzogen werden. So wird beispielsweise durch die Schwenkvorrichtung 9 die Formwalze 2 (Fig. 2) verschwenkt und das erste Abdeckschild 7, das der Teigkammer 5 auf der dem Lagergehäuse 11 gegenüberliegenden Seite angeordnet ist, abgehoben und dann einzeln die Walzen von den Aufsteckachsen 6 abgenommen und durch andere Walzen bzw. Walzensätze ersetzt. Die neuen Walzen, also eine andere Einzugswalze 1, Formwalze 2 und Austragswalze 3 können sodann auf die Aufsteckachsen 6 aufgesteckt werden, die Abdeckschilde 7 bzw. das dem Lagergehäuse 11 gegenüber der Teigkammer 5 angeordnete Lagerschild 7 wieder an den Spannachsen 15 befestigt werden, die Formwalze wieder in das Abdeckschild 7 eingeschwenkt werden und sodann die Abdeckschilde 7 mittels dem Spannzylinder 13 stirnseitig an die Walzen angedrückt werden und somit die Abdichtung der Teigkammer 5 wieder erreicht werden. Durch die erfindungsgemäße Anordnung ist es somit besonders einfach, den Wechsel einzelner Walzensätze zu erreichen bzw. die Reinigung der Teigkammer 5 einfacher zu bewirken.

Eine bevorzugte Ausführungsform der Spannachsen 15 sieht vor, dass die Spannachsen 15 längenverstellbar ausgebildet sind, wobei die Spannachsen 15 eine Spannstange 16 und eine zumindest teilweise hohl ausgebildete Spannhülse 17 umfassen, wobei die Spannstange 16 in der Spannhülse 17 versenkbar ist. Eine derartige bevorzugte Ausbildungsform der Spannachsen 15 ist in den Figuren 9 bis 11 dargestellt. Die Spannachse 15 weist eine Spannstange 16 und eine teilweise hohl ausgebildete Spannhülse 17 auf. Die Spannstange 16 weist vier quaderförmige, im Querschnitt viereckige ausgebildete Abschnitte auf (Fig. 9). Die quaderförmigen Abschnitte liegen entlang der Spannstange 16 hintereinander und sind jeweils durch eine Einschnürung voneinander beabstandet. Die Spannhülse 17 weist eine Einfuhröffnung 18 (Fig. 9a) auf, die gegengleich den viereckig ausgebildeten Abschnitten der Spannhülse 17 ausgebildet ist. Die Einfuhröffnung 18 weist also auch eine viereckige Einfuhröffnung 18 auf, in die die viereckig ausgebildeten Abschnitte der Spannstange 16 eingesteckt werden können (Fig. 9, Fig. 9c). Die Spannstange 16 ist relativ zur Spannhülse 17 verdrehbar, sodass die Spannstange 16 relativ zur Spannhülse 17 unterschiedliche Positionen einnehmen kann. Bei Verdrehung der Spannhülse 17 bzw. der Spannachse 16 relativ zueinander werden diese von einer Verstellposition in eine Verriegelungsposition verstellt. In der Verstellposition (Fig. 9, Fig. 9c) sind die im Querschnitt viereckig ausgebildeten Abschnitte der Spannstange 16 mit der Einführungsöffnung 18 deckungsgleich angeordnet und die Spannachse 16 kann in die Spannhülse 17 versenkt bzw. verstellt werden. Die Spannstange 16 wird dabei beispielsweise um die Breite eines der viereckig ausgebildeten Abschnitte der Spannstange 16 in die Einfuhröffnung 18 bzw. die Spannhülse 17 versenkt und dann anschließend wieder um 90 Grad in die Verriegelungsposition (Fig. 10, 11, 10a) verdreht. In der Verriegelungsposition sind die viereckig ausgebildeten Abschnitte der Spannstange 16 nicht deckungsgleich mit der Einfuhröffnung 18 angeordnet, sodass die Stirnseite eines der viereckig ausgebildeten Abschnitte an der Stirnseite der Einfuhröffnung 18 ansteht und die Spannstange 16 nicht in die Spannhülse 17 versenkt bzw. eingeführt werden kann. Durch die Ausbildung der Spannachse 15 mit der Spannhülse 17 und der Spannstange 16 ist es möglich, die Länge der Spannachse 15 einzustellen und beispielsweise auf die variable Breite der Walzen mit den Teilrollen 25 anzupassen. So bringt die längenverstellbare Ausbildung der Spannachse 15 eine weitere verbesserte Einstellmöglichkeit der Vorrichtung 10 auf unterschiedliche Walzensätze und ermöglicht damit weiters eine noch breitere Flexibilität in der Herstellung der Teigbänder.

Alternativ kann vorgesehen sein, dass die Spannachse 15 auch beispielsweise mittels gegengleich ausgebildeter Gewinde der Spannhülse 17 und der Spannstange 16 längenverstellbar ausgebildet ist oder an Stelle der viereckigen Abschnitte andere vieleckige Abschnitte auf der Spannstange 16 bzw. Spannachse 15 ausgebildet sind. Alternativ kann auch vorgesehen sein, dass die Längenverstellung der Spannachse 15 durch andere aus dem Stand der Technik bekannte Verriegelungssysteme und Längenverstellsysteme, beispielsweise mittels Bajonettverschlusse oder anderen Verstellmechanismen ausgebildet ist.

Wie in Fig. 2 dargestellt, kann optional vorgesehen sein, dass die Teigzufuhreinrichtung 4 trichterförmig ausgebildet ist, wobei die Teigzufuhreinrichtung 4 auf die Vorrichtung 10 aufsteckbar ist. Die Teigzufuhreinrichtung 4 weist dabei zwei Führungen 19 auf, die in zwei deckungsgleich entlang der Breite der Teigkammer in den Abdeckschilden 7 angeordnete und ausgebildete Ausnehmungen 50 (Fig. 9) einführbar sind. Optional kann weiters vorgesehen sein, dass die Teigzufuhreinrichtung 4 eine verstellbare Breite aufweist, wobei die Teigzufuhreinrichtung 4 vorzugsweise zwei zueinander in der Breite der Teigzufuhreinrichtung 4 entlang der Breite der Teigkammer 5 bzw. der Einzugswalze 1, der Formwalze 2 und/oder der Austragswalze 3 verstellbare Seitenteile aufweist.

In Fig. 12 ist eine bevorzugte Ausführungsform der erfindungsgemäßen Vorrichtung 10 in einer Schnittansicht dargestellt. Die in Fig. 12 dargestellte Ausbildung der Vorrichtung 10 ist als Vorrichtung zur sogenannten schonenden Formgebung ausgebildet, wobei mittels der Walzen eine möglichst geringe Belastung auf den Teig ausgeübt werden soll. Die Teigzufuhreinrichtung 4 ist als Zuführtrichter ausgebildet, in den Teig eingebracht wird. Zwischen der Einzugswalze 1 und der Formwalze 2 wird der Teig in die Teigkammer 5 eingebracht. Zwischen der Formwalze 2 und der Austragswalze 3 wird das geformte Teigband dann aus der Teigkammer 5 mit der vorgegebenen Dicke ausgebracht. Die Vorrichtung 10 weist drei Sensoren 22a, 22b, 22c auf, wobei der erste Sensor 22a den Füllstand der Teigzufuhreinrichtung 4 überwacht bzw. den Füllstand des Teigtrichters regelt. Der zweite Sensor 22b ist zwischen der Einzugswalze 1 und der Austragswalze 3 angeordnet, wobei diese untereinander in einem Abstand angeordnet sind und der Sensor 22b die Fließgeschwindigkeit des Teiges bzw. die Dicke des Teigbandes und Teiges in der Teigkammer 5 erfasst und an eine Regeleinrichtung weiterleitet. Durch die erfasste Dicke bzw. Fließgeschwindigkeit des Teiges in der Teigkammer 5 mittels des Sensors 22b kann die Regeleinrichtung die Drehzahlen der Einzugswalze 1, der Formwalze 2 und der Austragswalze 3 regeln, sodass eine minimale Belastung des Teiges für die schonende Formgebung erfolgen kann. Um ein Anhaften des Teiges bzw. Teigbandes an der Formwalze 2 bzw. der Austragswalze 3 zu verhindern, sind zwei Abstreifer 31 und 32 an deren Umfang anliegend angeordnet. Mit Hilfe des dritten Sensors 22c, der im Bereich der Austragswalze 3 in Förderrichtung des Teigbandes hinter der Teigkammer 5 angeordnet ist, kann dann die Spannung des Teigbandes gegenüber dem Auslaufband bzw. dem Transportband 33 geregelt werden und so eine ungewollte Streckung bzw. Stauchung des geformten Teigbandes verhindert werden.

In Fig. 13 ist eine weitere bevorzugte Ausführungsform der Vorrichtung 10 in einer Schnittansicht dargestellt. Die Vorrichtung 10 ist in der Fig. 13 ähnlich der Fig. 12 ausgebildet, jedoch werden zum Erhalt der geregelten Gärblasen 51 innerhalb des geformten Teigbandes am Ausgang der Teigkammer 5 zwischen der Formwalze 2 und der Austragswalze 3 in Fließrichtung des Teigbandes vier hintereinander angeordnete Formrollen 23 angeordnet. Die Formrollen 23 sind im Abstand der Dicke des Teigbandes zur Austragswalze 3 angeordnet und ermöglichen dabei eine schonende Förderung des Teigbandes und den Erhalt von in dem Teig bzw. dem Teigband enthaltenen Gärblasen 51. Die Formrollen 23 weisen bei dieser Ausführungsform jeweils über den Umfang radial verlaufende entlang der Breite gleichmäßig verteilte Formrillen 24 (Fig. 15) auf. Die Formrillen 24 der Formrollen 23 sind annähernd sinusförmig ausgebildet, wobei die Formrillen 24 der Formrollen 23 jeweils gleich zueinander angeordnet sind, sodass jeweils die Wellentäler 54 der Formrollen 23 mit den Wellentälern 54 der anderen Formrollen 23 deckungsgleich angeordnet sind. Durch die Form, Tiefe und Teilung der Formrillen 24 der Formrollen 23 ist es möglich, die Gärblasen 51 in einer Art Bypass durch die Formrollen 23 und die Austragswalze 3 zu schleusen. Alternativ kann vorgesehen sein, dass auch die Einzugswalze 1 und/oder die Formwalze 2 und/oder die Austragswalze 3 Formrillen 24 aufweisen, die jeweils bezüglich der Wellentäler 54 bzw. Wellenberge 55 gleich angeordnet sind.

Alternativ kann auch vorgesehen sein, dass die Formrollen 23 die Einzugswalze 1, die Formwalze 2 und die Austragswalze 3 Formrillen 24 aufweisen, die jeweils gegengleich zu den anderen Walzen- bzw. Formrollen 23, also den benachbarten Walzen- oder Formrollen 23, angeordnet sind, wobei jeweils die Wellentäler 54 der einen Formrollen 23 mit den Wellenbergen 55 der benachbarten Formrollen 23 bzw. Walzen deckungsgleich angeordnet sind. Mit einer gegengleichen Anordnung der Formrillen 24 auf den Walzen- bzw. Formrollen ist es möglich, die gewünschte Verteilung und Größe der Gärblasen 51 in dem Teigband exakt zu steuern.

## Patentansprüche

1. Vorrichtung (10) zum Formen eines Teigbandes umfassend eine Teigzufuhreinrichtung (4) mit der Teig in die Vorrichtung (10) einbringbar ist, eine um ihre Achse drehbare Einzugswalze (1), eine um ihre Achse drehbare Formwalze (2), eine um ihre Achse drehbare Austragswalze (3) und zumindest einen Antrieb (8) mit dem die Einzugswalze (1) und/oder die Formwalze (2) und/oder die Austragswalze (3) antreibbar sind,
- wobei die Achsen der Einzugswalze (1), der Formwalze (2) und der Austragswalze (3), parallel in einem Abstand zueinander angeordnet sind und zwischen der Einzugswalze (1), der Formwalze (2) und der Austragswalze (3) eine Teigkammer (5) ausgebildet ist,
- wobei die Vorrichtung zwei Abdeckschilde (7) aufweist, die die Teigkammer (5) seitlich, insbesondere an den Stirnseiten der Einzugswalze (1), der Formwalze (2) und der Austragswalze (3), begrenzen,
- wobei die Einzugswalze (1) und die Formwalze (2) im Bereich der Teigzufuhreinrichtung (4) in einem Abstand zueinander angeordnet sind, sodass Teig von der Teigzufuhreinrichtung (4) auf den Umfang der Einzugswalze (1) und der Formwalze (2) aufbringbar und durch Drehung der Einzugswalze (1) und der Formwalze (2) in die Teigkammer (5) einbringbar ist, und
- wobei die Formwalze (2) und die Austragswalze (3) in einem Abstand zueinander angeordnet sind, sodass Teig zwischen der Formwalze (2) und der Austragswalze (3) mit einer definierten Dicke aus der Teigkammer (5) als geformtes Teigband ausbringbar ist, wobei die Einzugswalze (1), die Formwalze (2) und die Austragswalze (3), fliegend gelagert sind und die Lagerungen der Einzugswalze (1), der Formwalze (2) und der Austragswalze (3) auf einer Seite der Vorrichtung (10) neben der Teigkammer (5) angeordnet sind,
**wobei** zwischen dem Antrieb (8) und der Einzugswalze (1) und/oder der Formwalze (2) und/oder der Austragswalze (3) eine Aufsteckachse (6) angeordnet ist, wobei die Aufsteckachse (6) in einem, insbesondere hermetisch abgedichteten, Lagergehäuse (11) gelagert ist, wobei die Einzugswalze (1) und/oder die Formwalze (2) und/oder die Austragswalze (3) auf oder in die Aufsteckachse (6) wechselbar, aufsteckbar und/oder lösbar befestigt sind, wobei die Einzugswalze (1) und/oder die Formwalze (2) und/oder die Austragswalze (3) über die Aufsteckachse (6) durch den Antrieb (8) verdrehbar sind und wobei die Lagerung der Einzugswalze (1) und/oder der Formwalze (2) und/oder der Austragswalze (3) durch die Lagerung der Aufsteckachse (6) ausgebildet ist,
wobei die Einzugswalze (1) und/oder die Formwalze (2) und/oder die Austragswalze (3) und/oder die jeweilige Aufsteckachse (6) hohlzylindrisch ausgebildet sind,
wobei die Abdeckschilde (7) lösbar an der Vorrichtung (10) befestigt sind,
wobei
die Vorrichtung (10) zumindest eine Spannvorrichtung, insbesondere einen Spannzylinder (13), umfasst, wobei mit der Spannvorrichtung zumindest eines der Abdeckschilde (7) in Richtung der Achse der Einzugswalze (1) und/oder der Formwalze (2) und/oder der Austragswalze (3) an die Einzugswalze (1), die Formwalze (2) und die Austragswalze (3) andrückbar ist, wobei die Spannvorrichtung, insbesondere der Spannzylinder (13), neben der Teigkammer (5), vorzugsweise in dem Lagergehäuse (11), auf der Seite Vorrichtung (10) angeordnet ist, auf der die Lagerungen der Einzugswalze (1), der Formwalze (2) und der Austragswalze (3) angeordnet sind, und
wobei
die Vorrichtung (10) zumindest eine, insbesondere drei, längliche Spannachse (15) aufweist, wobei die Spannachse (15), insbesondere jeweils eine der drei Spannachsen (15), durch die Einzugswalze (1) oder die Formwalze (2) oder die Austragswalze (3) und jeweils die jeweilige Aufsteckachse (6) durchgeführt ist und die jeweilige Walze auf der Spannachse (15), insbesondere der jeweiligen Spannachse (15), drehbar gelagert ist,
- wobei die Spannachse (15) mit der Spannvorrichtung, insbesondere dem Spannzylinder (13), insbesondere alle Spannachsen (15) über einen Spannflansch (14) mit dem Spannzylinder (13), verbunden ist und zumindest eines der Abdeckschilde (7), insbesondere der dem Lagergehäuse (11) bezüglich der Walzen gegenüberliegende Abdeckschild (7), mit der Spannachse (15) derart, insbesondere lösbar, verbunden ist, dass bei Betätigung der Spannvorrichtung, insbesondere des Spannzylinders (13), zumindest einer der Abdeckschilde (7), insbesondere der dem Lagergehäuse (11) gegenüberliegende Abdeckschild (7), in Richtung der Achse der Einzugswalze (1), der Formwalze (2) und der Austragswalze (3) an die Einzugswalze (1), die Formwalze (2) und die Austragswalze (3) andrückbar ist.

2. Vorrichtung (10) nach Anspruch 1, **dadurch gekennzeichnet, dass** die Vorrichtung (10) drei Aufsteckachsen (6) aufweist, wobei jeweils die Einzugswalze (1) und/oder die Formwalze (2) und/oder die Austragswalze (3) auf den jeweiligen Aufsteckachsen (6) wechselbar, aufsteckbar und/oder lösbar befestigt sind.

3. Vorrichtung (10) nach einem der vorangehenden Ansprüche, **dadurch gekennzeichnet, dass** die Einzugswalze (1) und/oder die Formwalze (2) und/oder die Austragswalze (3) aus einer Anzahl von Teilrollen (25) mit definierter Breite bestehen, wobei die Teilrollen (25) der Einzugswalze (1) und/oder der Formwalze (2) und/oder der Austragswalze (3) jeweils den gleichen Durchmesser aufweisen und, insbesondere stirnseitig, aneinander befestigbar sind und dass die Summe der Breite der Teilrollen (25), die Breite der Einzugswalze (1) und/oder der Formwalze (2) und/oder der Austragswalze (3) vorgeben.

4. Vorrichtung (10) nach einem der vorangehenden Ansprüche, **dadurch gekennzeichnet, dass** die Einzugswalze (1) und/oder die Formwalze (2) und/oder die Austragswalze (3) als Profilwalzen ausgebildet sind, wobei die Profile karo-, loch-, zickzack-, pfeil-, bogen- oder wellenförmig als Vertiefungen oder als Erhöhungen entlang des Umfangs der Einzugswalze (1) und/oder der Formwalze (2) und/oder der Austragswalze (3) ausgebildet sind.

5. Vorrichtung (10) nach einem der vorangehenden Ansprüche, **dadurch gekennzeichnet, dass** die Vorrichtung (10) eine Schwenkvorrichtung (9) umfasst, wobei die Einzugswalze (1) und/oder die Formwalze (2) und/oder die Austragswalze (3) mittels der Schwenkvorrichtung (9) verschwenkbar sind, wobei der Abstand der Achse der Einzugswalze (1) und/oder der Formwalze (2) und/oder der Austragswalze (3) zu den Achsen zumindest einer der jeweils anderen Walzen verstellbar ist.

6. Vorrichtung nach Anspruch 5, **dadurch gekennzeichnet, dass** die Schwenkvorrichtung (9) einen Schwenkhebel (91) umfasst, wobei der Schwenkhebel (91) um eine Schwenkachse (92), insbesondere mittels eines Hydraulik- oder Pneumatikzylinders oder elektromechanisch, verschwenkbar ist, und wobei die Lagerung der Einzugswalze (1) und/oder der Formwalze (2) und/oder der Austragswalze (3) in dem Schwenkhebel (91) angeordnet ist, wobei bei Verschwenken des Schwenkhebels (91) der Abstand der Achse der Einzugswalze (1) und/oder der Formwalze (2) und/oder der Austragswalze (3) zu den jeweils anderen Walzen verstellbar und einstellbar ist.

7. Vorrichtung (10) nach einem der vorangehenden Ansprüche, **dadurch gekennzeichnet, dass** die Spannachse (15), insbesondere die drei Spannachsen (15), längenverstellbar ausgebildet ist, wobei die Spannachse (15) eine Spannstange (16) und eine zumindest teilweise hohl ausgebildete Spannhülse (17) umfasst, wobei die Spannstange (16) in der Spannhülse (17) definiert versenkbar ist und derart die Länge der Spannachse (15) veränderbar ist.

8. Vorrichtung (10) nach Anspruch 7, **dadurch gekennzeichnet, dass** die Spannstange (16) und die Spannhülse (17) ein jeweils gegengleich ausgebildetes Gewinde oder Rastelement umfassen, wobei die Spannstange (16) in der Spannhülse (17) zur Längenverstellung der Spannachse (15), insbesondere durch Verdrehung der Spannhülse (17) relativ zur Spannstange (16), teleskopartig schrittweise versenkbar ist.

9. Vorrichtung (10) nach einem der Ansprüche 7 oder 8, **dadurch gekennzeichnet, dass** die Spannstange (16) eine Anzahl entlang der Achse hintereinanderliegender, im Querschnitt vieleckig, insbesondere viereckig, ausgebildeter Abschnitte aufweist, wobei die Spannhülse (17) zumindest eine Einfuhröffnung (18) aufweist, die gegengleich den vieleckig ausgebildeten Abschnitten der Spannhülse (17) ausgebildet ist, wobei bei Verdrehung der Spannachse (16) in ihrer Achse relativ zur Spannhülse (17), insbesondere um 90°, die Spannachse (16) von einer Verstellposition in eine Verriegelungsposition verstellbar ist, wobei in der Verstellposition einer der im Querschnitt vieleckig ausgebildeten Abschnitte der Spannstange (16) mit der Einfuhröffnung (18) deckungsgleich angeordnet ist und die Spannachse (16) um die Breite des vieleckig ausgebildeten Abschnittes der Spannstange (16) in der Spannhülse (17) versenkbar ist und wobei in der Verriegelungsposition einer der vieleckig ausgebildeten Abschnitte der Spannstange (16) nicht deckungsgleich mit der Einfuhröffnung (18) angeordnet ist, sodass die Stirnseite des vieleckig ausgebildeten Abschnittes an der Stirnseite der Einfuhröffnung (18) ansteht und die Spannstange (16) nicht in die Spannhülse (17) versenkbar ist.

10. Vorrichtung (10) nach einem der vorangehenden Ansprüche, **dadurch gekennzeichnet, dass** die Vorrichtung drei Antriebe (8) umfasst, wobei die Einzugswalze (1) und die Formwalze (2) und die Austragswalze (3) jeweils separat, vorzugsweise mit unterschiedlichen Drehzahlen, antreibbar sind.

11. Vorrichtung (10) nach einem der vorangehenden Ansprüche, **dadurch gekennzeichnet, dass** die Teigzufuhreinrichtung (4) trichterförmig ausgebildet ist, wobei die Teigzufuhreinrichtung (4) auf die Vorrichtung (10) aufsteckbar ist, wobei die Teigzufuhreinrichtung (4) vorzugsweise zwei Führungen (19) aufweist die in zwei deckungsgleich entlang der Breite der Teigkammer in den Abdeckschilden (7) angeordnete und ausgebildete Ausnehmungen (10) einführbar sind.

12. Vorrichtung (10) nach Anspruch 11, **dadurch gekennzeichnet, dass** die Teigzufuhreinrichtung (4) eine verstellbare Breite aufweist, wobei die Teigzufuhreinrichtung (4) vorzugsweise zwei zueinander in der Breite der Teigzufuhreinrichtung (4) entlang der Breite der Einzugswalze (1) und/oder der Formwalze (2) und/oder der Austragswalze (3) verstellbare Seitenteile aufweist.

13. Vorrichtung (10) nach einem der vorangehenden Ansprüche, **dadurch gekennzeichnet, dass** die Vorrichtung (10) zumindest einen Sensor (22) aufweist, wobei der Sensor (22) derart zwischen der Einzugswalze (1) und/oder der Formwalze (2) und/oder der Austragswalze (3) angeordnet ist, dass die Dicke des produzierten Teigbandes in der Teigkammer (5) und/oder am Ausgang der Teigkammer zwischen der Formwalze (2) und der Austragswalze (3) messbar ist und wobei insbesondere eine Regelvorrichtung vorgesehen ist, der die Messwerte des Sensors (22) zugeführt werden und mit der die Drehzahl der Einzugswalze (1) und/oder der Formwalze (2) und/oder der Austragswalze (3) regelbar ist.

14. Vorrichtung (10) nach einem der vorangehenden Ansprüche, **dadurch gekennzeichnet, dass** zur Verbesserung der Porenverteilung in Transportrichtung des geformten Teigbandes nach der Teigkammer (5) zumindest eine, insbesondere mehrere, Formrolle (23) in einem Abstand, insbesondere einem Abstand entsprechend der Dicke des geformten Teigbandes, zur Austragswalze (3) angeordnet ist.

15. Vorrichtung (10) nach einem der vorangehenden Ansprüche, **dadurch gekennzeichnet, dass** die Einzugswalze (1) und/oder die Formwalze (2) und/oder die Austragswalze (3) und/oder die Formrolle (23) über den Umfang radial verlaufende entlang der Breit gleichmäßig verteilte Formrillen (24) aufweisen, wobei die Formrillen (24) annähernd sinusförmig ausgebildet sind, wobei die Formrillen (24) der Einzugswalze (1) und/oder der Formwalze (2) und/oder der Austragswalze (3) und/oder der Formrolle (23) jeweils gleich zueinander angeordnet sind, sodass jeweils die Wellentäler der Einzugswalze (1) und/oder der Formwalze (2) und/oder der Austragswalze (3) und/oder der Formrolle (23) mit den Wellentälern einer oder aller anderen Walzen deckungsgleich angeordnet sind.

16. Vorrichtung (10) nach einem der vorangehenden Ansprüche, **dadurch gekennzeichnet, dass** die Einzugswalze (1) und/oder die Formwalze (2) und/oder die Austragswalze (3) und/oder die Formrolle (23) über den Umfang radial verlaufende, entlang der Breit gleichmäßig verteilte Formrillen (24) aufweisen, wobei die Formrillen (24) annähernd sinusförmig ausgebildet sind, wobei die Formrillen (24) der Einzugswalze (1) und/oder der Formwalze (2) und/oder der Austragswalze (3) und/oder der Formrolle (23) jeweils gegengleich zueinander angeordnet sind, sodass jeweils die Wellentäler der Einzugswalze (1) und/oder der Formwalze (2) und/oder der Austragswalze (3) und/oder der Formrolle (23) mit den Wellenbergen einer oder aller anderen Walzen deckungsgleich angeordnet sind.

## Claims

1. Device (10) for forming a dough strip comprising a dough-feeding apparatus (4) by which dough can be introduced into the device (10), a feed roller (1) rotatable about its axis, a forming roller (2) rotatable about its axis, a discharge roller (3) rotatable about its axis and at least one drive (8) by which the feed roller (1) and/or the forming roller (2) and/or the discharge roller (3) can be driven,
- wherein the axles of the feed roller (1), the forming roller (2) and the discharge roller (3) are arranged in parallel at a distance from one another and a dough chamber (5) is formed between the feed roller (1), the forming roller (2) and the discharge roller (3),
- wherein the device has two cover shields (7), which laterally delimit the dough chamber (5), in particular at the end faces of the feed roller (1), the forming roller (2) and the discharge roller (3),
- wherein the feed roller (1) and the forming roller (2) are arranged in the region of the dough-feeding apparatus (4) at a distance from one another so that dough from the dough-feeding apparatus (4) can be applied to the periphery of the feed roller (1) and the forming roller (2) and can be introduced into the dough chamber (5) by rotation of the feed roller (1) and the forming roller (2), and
- wherein the forming roller (2) and the discharge roller (3) are arranged at a distance from one another so that dough can be discharged from the dough chamber (5) between the forming roller (2) and the discharge roller (3) with a defined thickness as a formed dough strip, wherein the feed roller (1), the forming roller (2) and the discharge roller (3) are cantilevered and the bearings of the feed roller (1), the forming roller (2) and the discharge roller (3) are arranged on one side of the device (10) next to the dough chamber (5),
**wherein** between the drive (8) and the feed roller (1) and/or the forming roller (2) and/or the discharge roller (3) an attachment shaft (6) is arranged, wherein the attachment shaft (6) is mounted in an, in particular hermetically sealed, bearing housing (11), wherein the feed roller (1) and/or the forming roller (2) and/or the discharge roller (3) are fixed exchangeably, attachably and/or detachably on or in the attachment shaft (6), wherein the feed roller (1) and/or the forming roller (2) and/or the discharge roller (3) can be rotated by the drive (8) via the attachment shaft (6) and wherein the bearing of the feed roller (1) and/or the forming roller (2) and/or the discharge roller (3) is formed by the bearing of the attachment shaft (6),
wherein the feed roller (1) and/or the forming roller (2) and/or the discharge roller (3) and/or the respective attachment shaft (6) are formed as hollow cylinders,
wherein the cover shields (7) are fixed detachably to the device (10),
wherein the device (10) comprises at least one tensioning device, in particular a tensioning cylinder (13), wherein by the tensioning device at least one of the cover shields (7) can be pressed against the feed roller (1), the forming roller (2) and the discharge roller (3) in the direction of the axle of the feed roller (1) and/or the forming roller (2) and/or the discharge roller (3), wherein the tensioning device, in particular the tensioning cylinder (13), is arranged next to the dough chamber (5), preferably in the bearing housing (11), on the side device (10), on which the bearings of the feed roller (1), the forming roller (2) and the discharge roller (3) are arranged, and
wherein the device (10) has at least one, in particular three, elongated tensioning axle (15), wherein the tensioning axle (15), in particular one of the three tensioning axles (15) respectively, is passed through the feed roller (1) or the forming roller (2) or the discharge roller (3) and the respective attachment shaft (6) and the respective roller is rotatably mounted on the tensioning axle (15), in particular the respective tensioning axle (15),
- wherein the tensioning axle (15) is connected to the tensioning device, in particular the tensioning cylinder(13), in particular all tensioning axles (15), via a tensioning flange (14) to the tensioning cylinder (13) and at least one of the cover shields (7), in particular the cover shield (7) opposite the bearing housing (11) with respect to the rollers, is connected to the tensioning axle (15), in particular detachably, such that on activating the tensioning device, in particular the tensioning cylinder (13), at least one of the cover shields (7), in particular the cover shield (7) opposite the bearing housing (11), can be pressed against the feed roller (1), the forming roller (2) and the discharge roller (3) in the direction of the axle of the feed roller (1), the forming roller (2) and the discharge roller (3).

2. Device (10) according to claim 1, **characterised in that** the device (10) has three attachment shafts (6), wherein the feed roller (1) and/or the forming roller (2) and/or the discharge roller (3) respectively are fixed exchangeably, attachably and/or detachably onto the respective attachment shafts (6).

3. Device (10) according to any of the preceding claims, **characterised in that** the feed roller (1) and/or the forming roller (2) and/or the discharge roller (3) consist of a number of part rollers (25) with a defined width, wherein the part rollers (25) of the feed roller (1) and/or the forming roller (2) and/or the discharge roller (3) each have the same diameter and can be fixed to one another, in particular at the end face, and **in that** the sum of the width of the part rollers (25) predetermine the width of the feed roller (1) and/or the forming roller (2) and/or the discharge roller (3).

4. Device (10) according to any of the preceding claims, **characterised in that** the feed roller (1) and/or the forming roller (2) and/or the discharge roller (3) are configured as profiled rollers, wherein the profiles are configured in the form of a diamond, hole, zigzag, arrow, arc or wave as depressions or as elevations along the periphery of the feed roller (1) and/or the forming roller (2) and/or the discharge roller (3).

5. Device (10) according to any of the preceding claims, **characterised in that** the device (10) comprises a pivot device (9), wherein the feed roller (1) and/or the forming roller (2) and/or the discharge roller (3) can be pivoted by means of the pivot device (9), wherein the distance of the axle of the feed roller (1) and/or the forming roller (2) and/or the discharge roller (3) can be adjusted to the axles of at least one of the respective other rollers.

6. Device according to claim 5, **characterised in that** the pivot device (9) comprises a pivot lever (91), wherein the pivot lever (91) can be pivoted about a pivot axis (92), in particular by means of a hydraulic or pneumatic cylinder or electromechanically, and wherein the bearing of the feed roller (1) and/or the forming roller (2) and/or the discharge roller (3) is arranged in the pivot lever (91), wherein on pivoting the pivot lever (91) the distance of the axle of the feed roller (1) and/or the forming roller (2) and/or the discharge roller (3) from the other respective rollers can be adjusted and set.

7. Device (10) according to any of the preceding claims, **characterised in that** the tensioning axle (15), in particular the three tensioning axles (15), is configured to be adjustable in length, wherein the tensioning axle (15) comprises a tensioning rod (16) and an at least partially hollow tensioning sleeve (17), wherein the tensioning rod (16) is retractable in a defined manner in the tensioning sleeve (17) and the length of the tensioning axle (15) is thus variable.

8. Device (10) according to claim 7, **characterised in that** the tensioning rod (16) and the tensioning sleeve (17) each comprise a thread or latching element of opposite design, wherein the tensioning rod (16) is telescopically retractable step-by-step in the tensioning sleeve (17) for adjusting the length of the tensioning axle (15), in particular by rotating the tensioning sleeve (17) relative to the tensioning rod (16).

9. Device (10) according to any of claims 7 or 8, **characterised in that** the tensioning rod (16) has a number of sections which lie behind one another along the axis and are polygonal, in particular square, in cross-section, wherein the tensioning sleeve (17) has at least one insertion opening (18), which is formed opposite to the polygonal sections of the tensioning sleeve (17), wherein on rotating the tensioning axle (16) in its axis relative to the tensioning sleeve (17), in particular by 90°, the tensioning axle (16) can be adjusted from an adjustment position into a locking position, wherein in the adjustment position one of the sections of the tensioning rod (16), which is polygonal in cross-section, is arranged to be congruent with the insertion opening (18) and the tensioning axle (16) is retractable in the tensioning sleeve (17) by the width of the polygonal section of the tensioning rod (16) and wherein in the locking position one of the polygonal sections of the tensioning rod (16) is not arranged to be congruent with the insertion opening (18), so that the end face of the polygonal section abuts against the end face of the insertion opening (18) and the tensioning rod (16) is not retractable in the tensioning sleeve (17).

10. Device (10) according to any of the preceding claims, **characterised in that** the device comprises three drives (8), wherein the feed roller (1) and the forming roller (2) and the discharge roller (3) can each be driven separately, preferably at different speeds.

11. Device (10) according to any of the preceding claims, **characterised in that** the dough-feeding apparatus (4) is configured in the form of a funnel, wherein the dough-feeding apparatus (4) can be fitted onto the device (10), wherein the dough-feeding apparatus (4) preferably has two guides (19) which can be inserted into two recesses (10) arranged and formed to be congruent along the width of the dough chamber in the cover shields (7).

12. Device (10) according to claim 11, **characterised in that** the dough-feeding apparatus (4) has an adjustable width, wherein the dough-feeding apparatus (4) preferably has two side parts adjustable relative to one another in the width of the dough-feeding apparatus (4) along the width of the feed roller (1) and/or the forming roller (2) and/or the discharge roller (3).

13. Device (10) according to any of the preceding claims, **characterised in that** the device (10) has at least one sensor (22), wherein the sensor (22) is arranged between the feed roller (1) and/or the forming roller (2) and/or the discharge roller (3), such that the thickness of the produced dough strip can be measured in the dough chamber (5) and/or at the outlet of the dough chamber between the forming roller (2) and the discharge roller (3), and wherein in particular a control device is provided to which the measurements of the sensor (22) are supplied and by means of which the speed of the feed roller (1) and/or the forming roller (2) and/or the discharge roller (3) can be controlled.

14. Device (10) according to any of the preceding claims, **characterised in that** to improve the pore distribution in transport direction of the shaped dough strip downstream of the dough chamber (5) at least one, in particular a plurality, of forming roll (23) is arranged at a distance, in particular a distance corresponding to the thickness of the shaped dough strip, from the discharge roller (3).

15. Device (10) according to any of the preceding claims, **characterised in that** the feed roller (1) and/or the forming roller (2) and/or the discharge roller (3) and/or the forming roll (23) have forming grooves (24) which extend radially over the circumference and are uniformly distributed along the width, wherein the forming grooves (24) are configured to be approximately sinusoidal, wherein the forming grooves (24) of the feed roller (1) and/or the forming roller (2) and/or the discharge roller (3) and/or the forming roll (23) are arranged identically relative to one another so that in each case the wave troughs of the feed roller (1) and/or the forming roller (2) and/or the discharge roller (3) and/or the forming roll (23) are arranged to be congruent to the wave troughs of one or all other rollers.

16. Device (10) according to any of the preceding claims, **characterised in that** the feed roller (1) and/or the forming roller (2) and/or the discharge roller (3) and/or the forming roll (23) have forming grooves (24) which run radially over the circumference and are uniformly distributed along the width, wherein the forming grooves (24) are configured to be approximately sinusoidal, wherein the forming grooves (24) of the feed roller (1) and/or the forming roller (2) and/or the discharge roller (3) and/or the forming roll (23) are each arranged opposite one another so that in each case the wave troughs of the feed roller (1) and/or the forming roller (2) and/or the discharge roller (3) and/or the forming roll (23) are arranged to be congruent to the wave crests of one or all other rollers.

## Revendications

1. Dispositif (10) pour former une bande de pâte comprenant un dispositif d'alimentation en pâte (4) avec lequel la pâte peut être introduite dans le dispositif (10), un rouleau d'introduction (1) pouvant tourner autour de son axe, un rouleau de formage (2) pouvant tourner autour de son axe, un rouleau d'évacuation (3) pouvant tourner autour de son axe et au moins un entraînement (8) avec lequel le rouleau d'introduction (1) et/ou le rouleau de formage (2) et/ou le rouleau d'évacuation (3) peuvent être entraînés,
- dans lequel les axes du rouleau d'introduction (1), du rouleau de formage (2) et du rouleau d'évacuation (3) sont disposés parallèlement à distance des uns des autres et une chambre à pâte (5) est formée entre le rouleau d'introduction (1), le rouleau de formage (2) et le rouleau d'évacuation (3),
- dans lequel le dispositif présente deux boucliers de recouvrement (7) qui délimitent la chambre à pâte (5) latéralement, en particulier sur les faces frontales du rouleau d'introduction (1), du rouleau de formage (2) et du rouleau d'évacuation (3),
- dans lequel le rouleau d'introduction (1) et le rouleau de formage (2) sont disposés à distance l'un de l'autre au niveau du dispositif d'alimentation en pâte (4), de sorte que de la pâte peut être appliquée par le dispositif d'alimentation en pâte (4) sur la périphérie du rouleau d'introduction (1) et du rouleau de formage (2) et peut être introduite dans la chambre à pâte (5) par rotation du rouleau d'introduction (1) et du rouleau de formage (2), et
- dans lequel le rouleau de formage (2) et le rouleau d'évacuation (3) sont disposés à distance l'un de l'autre, de sorte que de la pâte d'une épaisseur définie peut être évacuée de la chambre à pâte (5) sous forme de bande de pâte formée entre le rouleau de formage (2) et le rouleau d'évacuation (3), dans lequel le rouleau d'introduction (1), le rouleau de formage (2) et le rouleau d'évacuation (3) sont montés en porte-à-faux et les paliers du rouleau d'introduction (1), du rouleau de formage (2) et du rouleau d'évacuation (3) sont disposés sur un côté du dispositif (10) à côté de la chambre à pâte (5),
**dans lequel** un axe d'emboîtement (6) est disposé entre l'entraînement (8) et le rouleau d'introduction (1) et/ou le rouleau de formage (2) et/ou le rouleau d'évacuation (3), dans lequel l'axe d'emboîtement (6) est monté dans un logement de palier (11), en particulier hermétiquement étanche, dans lequel le rouleau d'introduction (1) et/ou le rouleau de formage (2) et/ou le rouleau d'évacuation (3) sont interchangeables, emboîtables et/ou amovibles sur ou dans l'axe d'emboîtement (6), dans lequel le rouleau d'introduction (1) et/ou le rouleau de formage (2) et/ou le rouleau d'évacuation (3) peuvent être tournés par l'axe d'emboîtement (6) par l'intermédiaire de l'entraînement (8) et dans lequel le palier du rouleau d'introduction (1) et/ou du rouleau de formage (2) et/ou du rouleau d'évacuation (3) est formé par le palier de l'axe d'emboîtement (6),
dans lequel le rouleau d'introduction (1) et/ou le rouleau de formage (2) et/ou le rouleau d'évacuation (3) et/ou l'axe d'emboîtement respectif (6) sont réalisés sous forme de cylindre creux,
dans lequel les boucliers de recouvrement (7) sont fixés de manière amovible sur le dispositif (10),
dans lequel le dispositif (10) comprend au moins un dispositif de serrage, en particulier un cylindre de serrage (13), dans lequel au moins un des boucliers de recouvrement (7) peut être pressé contre le rouleau d'introduction (1) et/ou le rouleau de formage (2) et/ou le rouleau d'évacuation (3) avec le dispositif de serrage en direction de l'axe du rouleau d'introduction (1), du rouleau de formage (2) et du rouleau d'évacuation (3), dans lequel le dispositif de serrage, en particulier le cylindre de serrage (13), est disposé à côté de la chambre à pâte (5), de préférence dans le logement de palier (11), côté dispositif (10), sur lequel les paliers du rouleau d'introduction (1), du rouleau de formage (2) et du rouleau d'évacuation (3) sont disposés, et
dans lequel le dispositif (10) présente au moins un, en particulier trois, axe(s) de serrage (15) allongé(s), dans lequel l'axe de serrage (15), en particulier respectivement un des trois axes de serrage (15), est introduit à travers le rouleau d'introduction (1) ou le rouleau de formage (2) ou le rouleau d'évacuation (3) et respectivement l'axe d'emboîtement (6) respectif et le rouleau respectif est monté de manière rotative sur l'axe de serrage (15), en particulier l'axe de serrage respectif (15), - dans lequel l'axe de serrage (15), avec le dispositif de serrage, en particulier le cylindre de serrage (13), en particulier tous les axes de serrage (15), est connecté au cylindre de serrage (13) par l'intermédiaire d'une bride de serrage (14), et au moins un des boucliers de recouvrement (7), en particulier le bouclier de recouvrement (7) opposé au logement de palier (11) par rapport aux rouleaux, est connecté à l'axe de serrage (15), en particulier de manière amovible, de sorte que, lors de l'actionnement du dispositif de serrage, en particulier du cylindre de serrage (13), au moins un des boucliers de recouvrement (7), en particulier le bouclier de recouvrement (7) opposé au logement de palier (11), peut être pressé contre le rouleau d'introduction (1), le rouleau de formage (2) et le rouleau d'évacuation (3) en direction de l'axe du rouleau d'introduction (1), du rouleau de formage (2) et du rouleau d'évacuation (3).

2. Dispositif (10) selon la revendication 1, **caractérisé en ce que** le dispositif (10) présente trois axes d'emboîtement (6), dans lequel le rouleau d'introduction (1) et/ou le rouleau de formage (2) et/ou le rouleau d'évacuation (3) respectivement sont fixés sur les axes d'emboîtement (6) respectifs de manière interchangeable, emboîtable et/ou amovible.

3. Dispositif (10) selon l'une quelconque des revendications précédentes, **caractérisé en ce que** le rouleau d'introduction (1) et/ou le rouleau de formage (2) et/ou le rouleau d'évacuation (3) sont constitués d'un certain nombre de cylindres partiels (25) de largeur définie, dans lequel les cylindres partiels (25) du rouleau d'introduction (1) et/ou du rouleau de formage (2) et/ou du rouleau d'évacuation (3) présentent chacun le même diamètre et peuvent être fixés les uns aux autres, en particulier frontalement, et **en ce que** la somme des largeurs des cylindres partiels (25) détermine la largeur du rouleau d'introduction (1) et/ou du rouleau de formage (2) et/ou du rouleau d'évacuation (3).

4. Dispositif (10) selon l'une quelconque des revendications précédentes, **caractérisé en ce que** le rouleau d'introduction (1) et/ou le rouleau de formage (2) et/ou le rouleau d'évacuation (3) sont réalisés sous forme de rouleaux profilés, dans lequel les profilés sont réalisés en forme de carreaux, trous, zigzags, flèches, arcs ou ondulations sous forme de creux ou de bosses le long de la périphérie du rouleau d'introduction (1) et/ou du rouleau de formage (2) et/ou du rouleau d'évacuation (3).

5. Dispositif (10) selon l'une quelconque des revendications précédentes, **caractérisé en ce que** le dispositif (10) comprend un dispositif de pivotement (9), dans lequel le rouleau d'introduction (1) et/ou le rouleau de formage (2) et/ou le rouleau d'évacuation (3) peuvent pivoter au moyen du dispositif de pivotement (9), dans lequel la distance entre l'axe du rouleau d'introduction (1) et/ou du rouleau de formage (2) et/ou du rouleau d'évacuation (3) et les axes d'au moins un des autres rouleaux respectifs est réglable.

6. Dispositif selon la revendication 5, **caractérisé en ce que** le dispositif de pivotement (9) comprend un levier de pivotement (91), dans lequel le levier de pivotement (91) peut pivoter autour d'un axe de pivotement (92), en particulier au moyen d'un vérin hydraulique ou pneumatique ou électromécanique, et dans lequel le palier du rouleau d'introduction (1) et/ou du rouleau de formage (2) et/ou du rouleau d'évacuation (3) est disposé dans le levier de pivotement (91), dans lequel la distance entre l'axe du rouleau d'introduction (1) et/ou du rouleau de formage (2) et/ou du rouleau d'évacuation (3) et les autres rouleaux respectifs est réglable et ajustable lors du pivotement du levier de pivotement (91).

7. Dispositif (10) selon l'une quelconque des revendications précédentes, **caractérisé en ce que** l'axe de serrage (15), en particulier les trois axes de serrage (15), est conçu pour être réglable en longueur, dans lequel l'axe de serrage (15) comprend une tige de serrage (16) et un manchon de serrage (17) conçu au moins partiellement creux, dans lequel la tige de serrage (16) peut être escamotée de manière définie dans le manchon de serrage (17) et la longueur de l'axe de serrage (15) peut ainsi être modifiée.

8. Dispositif (10) selon la revendication 7, **caractérisé en ce que** la tige de serrage (16) et le manchon de serrage (17) comprennent respectivement un filetage ou un élément d'encliquetage réalisé de manière opposée, dans lequel la tige de serrage (16) peut être escamotée progressivement de manière télescopique dans le manchon de serrage (17) pour le réglage de la longueur de l'axe de serrage (15), en particulier par rotation du manchon de serrage (17) par rapport à la tige de serrage (16).

9. Dispositif (10) selon l'une quelconque des revendications 7 ou 8, **caractérisé en ce que** la tige de serrage (16) présente un certain nombre de tronçons de section polygonale, en particulier quadrangulaire, disposés les uns derrière les autres le long de l'axe, dans lequel le manchon de serrage (17) présente au moins une ouverture d'introduction (18), qui est réalisée à l'opposé des tronçons de section polygonale du manchon de serrage (17), dans lequel l'axe de serrage (16) peut être déplacé d'une position de réglage dans une position de verrouillage en cas de rotation de l'axe de serrage (16) dans son axe par rapport au manchon de serrage (17), en particulier de 90°, dans lequel dans la position de réglage, un des tronçons de section polygonale de la tige de serrage (16) est disposé de manière à coïncider avec l'ouverture d'introduction (18) et l'axe de serrage (16) peut être escamoté dans le manchon de serrage (17) de la largeur du tronçon polygonal de la tige de serrage (16) et dans lequel, dans la position de verrouillage, l'un des tronçons de section polygonale de la tige de serrage (16) n'est pas disposé de manière à coïncider avec l'ouverture d'introduction (18), de sorte que la face frontale du tronçon de section polygonale est en butée contre la face frontale de l'ouverture d'introduction (18) et que la tige de serrage (16) ne peut pas être escamotée dans le manchon de serrage (17).

10. Dispositif (10) selon l'une quelconque des revendications précédentes, **caractérisé en ce que** le dispositif comprend trois entraînements (8), dans lequel le rouleau d'introduction (1) et le rouleau de formage (2) et le rouleau d'évacuation (3) peuvent être entraînés respectivement séparément, de préférence à des vitesses de rotation différentes.

11. Dispositif (10) selon l'une quelconque des revendications précédentes, **caractérisé en ce que** le dispositif d'alimentation en pâte (4) est réalisé en forme d'entonnoir, dans lequel le dispositif d'alimentation en pâte (4) peut être emboîté sur le dispositif (10), dans lequel le dispositif d'alimentation en pâte (4) présente de préférence deux guidages (19) qui peuvent être introduits dans deux évidements (10) disposés et formés de manière à coïncider le long de la largeur de la chambre à pâte dans les boucliers de recouvrement (7).

12. Dispositif (10) selon la revendication 11, **caractérisé en ce que** le dispositif d'alimentation en pâte (4) présente une largeur réglable, dans lequel le dispositif d'alimentation en pâte (4) présente de préférence deux parties latérales réglables l'une par rapport à l'autre dans la largeur du dispositif d'alimentation en pâte (4) le long de la largeur du rouleau d'introduction (1) et/ou du rouleau de formage (2) et/ou du rouleau d'évacuation (3).

13. Dispositif (10) selon l'une quelconque des revendications précédentes, **caractérisé en ce que** le dispositif (10) présente au moins un capteur (22), dans lequel le capteur (22) est disposé de sorte que, entre le rouleau d'introduction (1) et/ou le rouleau de formage (2) et/ou le rouleau d'évacuation (3), l'épaisseur de la bande de pâte produite peut être mesurée dans la chambre à pâte (5) et/ou à la sortie de la chambre à pâte entre le rouleau de formage (2) et le rouleau d'évacuation (3), et dans lequel en particulier un dispositif de commande est prévu, auquel les valeurs de mesure du capteur (22) sont fournies et avec lequel la vitesse de rotation du rouleau d'introduction (1) et/ou du rouleau de formage (2) et/ou du rouleau d'évacuation (3) peut être réglée.

14. Dispositif (10) selon l'une quelconque des revendications précédentes, **caractérisé en ce que**, pour améliorer la répartition des pores dans la direction de transport de la bande de pâte formée après la chambre à pâte (5), au moins un, en particulier plusieurs, cylindre(s) de formage (23) est disposé à une distance, en particulier une distance correspondant à l'épaisseur de la bande de pâte formée, du rouleau d'évacuation (3).

15. Dispositif (10) selon l'une quelconque des revendications précédentes, **caractérisé en ce que** le rouleau d'introduction (1) et/ou le rouleau de formage (2) et/ou le rouleau d'évacuation (3) et/ou le cylindre de formage (23) présentent des rainures de formage (24) s'étendant radialement sur la périphérie et réparties uniformément le long de la largeur, dans lequel les rainures de formage (24) sont réalisées approximativement sinusoïdalement, dans lequel les rainures de formage (24) du rouleau d'introduction (1) et/ou du rouleau de formage (2) et/ou du rouleau d'évacuation (3) et/ou du cylindre de formage (23) sont respectivement disposées de manière identique les unes par rapport aux autres, de sorte que respectivement les creux d'onde du rouleau d'introduction (1) et/ou du rouleau de formage (2) et/ou du rouleau d'évacuation (3) et/ou du cylindre de formage (23) sont disposés de manière à coïncider avec les creux d'onde d'un ou de tous les autres rouleaux.

16. Dispositif (10) selon l'une quelconque des revendications précédentes, **caractérisé en ce que** le rouleau d'introduction (1) et/ou le rouleau de formage (2) et/ou le rouleau d'évacuation (3) et/ou le cylindre de formage (23) présentent des rainures de formage (24) s'étendant radialement sur la périphérie et réparties uniformément le long de la largeur, dans lequel les rainures de formage (24) sont réalisées approximativement sinusoïdalement, dans lequel les rainures de formage (24) du rouleau d'introduction (1) et/ou du rouleau de formage (2) et/ou du rouleau d'évacuation (3) et/ou du cylindre de formage (23) sont respectivement disposées de manière opposée les unes par rapport aux autres, de sorte que respectivement les creux d'onde du rouleau d'introduction (1) et/ou du rouleau de formage (2) et/ou du rouleau d'évacuation (3) et/ou du cylindre de formage (23) sont disposés de manière à coïncider avec les crêtes d'onde d'un ou de tous les autres rouleaux.
